(19) Europäisches Patentamt
European Patent Office
Office européen des brevets

(11) **EP 3 490 042 B1**

(12) **EUROPEAN PATENT SPECIFICATION**

(45) Date of publication and mention
of the grant of the patent:
**09.06.2021 Bulletin 2021/23**

(21) Application number: **17831142.9**

(22) Date of filing: **21.07.2017**

(51) Int Cl.:
*H01M 4/96* *(2006.01)*          *D21H 13/50* *(2006.01)*
*H01M 4/88* *(2006.01)*          *C01B 32/05* *(2017.01)*
*H01M 8/10* *(2016.01)*

(86) International application number:
**PCT/JP2017/026471**

(87) International publication number:
**WO 2018/016626 (25.01.2018 Gazette 2018/04)**

(54) **POROUS BASE MATERIAL, POROUS ELECTRODE, CARBON FIBER PAPER, METHOD FOR MANUFACTURING CARBON FIBER PAPER, AND METHOD FOR MANUFACTURING POROUS BASE MATERIAL**

PORÖSES TRÄGERMATERIAL, PORÖSE ELEKTRODE, KOHLENSTOFFFASERPAPIER, VERFAHREN ZUR HERSTELLUNG VON KOHLENSTOFFFASERPAPIER UND VERFAHREN ZUR HERSTELLUNG EINES PORÖSEN TRÄGERMATERIALS

MATÉRIAU DE BASE POREUX, ÉLECTRODE POREUSE, PAPIER EN FIBRE DE CARBONE, PROCÉDÉ DE FABRICATION DE PAPIER EN FIBRE DE CARBONE ET PROCÉDÉ DE FABRICATION DE MATÉRIAU DE BASE POREUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.07.2016 JP 2016143905**

(43) Date of publication of application:
**29.05.2019 Bulletin 2019/22**

(73) Proprietor: **Mitsubishi Chemical Corporation**
**Tokyo 100-8251 (JP)**

(72) Inventors:
• **TATSUNO, Hiroto**
**Tokyo 100-8251 (JP)**
• **SUMIOKA, Kazuhiro**
**Tokyo 100-8251 (JP)**
• **HIDESHIMA, Kota**
**Tokyo 100-8251 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 369 528          CA-A1- 2 965 802**
**JP-A- S62 123 662          JP-A- 2003 221 770**
**JP-A- 2004 214 072          JP-A- 2007 335 370**
**US-A- 4 506 028          US-A1- 2002 175 073**

EP 3 490 042 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a porous base material that can be used as an electrode base material of a solid polymer fuel cell or a redox flow cell, a method for manufacturing the porous base material, a porous electrode using the porous base material, carbon fiber paper, and a method for manufacturing the carbon fiber paper.

Background Art

A solid polymer fuel cell (hereinafter, also simply referred to as a "fuel cell") is required to have high conductivity, an excellent current collection capacity, and a favorable mechanical strength so as to withstand various operations. At the same time, diffusion of a substance contributing to an electrode reaction needs to be favorable. For this reason, a planar structure composed mainly of carbon fibers and a carbonized resin binder is generally used for the electrode base material.

In applications requiring high power density such as vehicles that have attracted attention in recent years, a fuel cell is operated in a high current density region. Therefore, the amount of water generated per unit reaction area also increases. Accordingly, it is important for the fuel cell to efficiently discharge water generated by the reaction and to secure a gas diffusion path. That is, a planar structure which is composed of carbon fibers and a carbonized resin binder and used as a material of a gas diffusion layer of a fuel cell is required to have significantly high gas permeability and a high drainage property. Furthermore, in order to use the planar structure in vehicle applications, it is desirable that the planar structure also have excellent mass productivity such as continuous workability in a roll-to-roll manner.

In order to improve the gas permeability, it is effective to enlarge the void volume of the electrode base material. Therefore, it is possible to improve the gas permeability by enlarging the void of the planar structure composed of carbon fibers and a carbonized resin binder. One such method is to reduce the content of a carbonized resin binder component in the planar structure composed of carbon fibers and a carbonized resin binder which is a raw material of the electrode base material. However, in a case where the content of the carbonized resin binder component decreases, in some cases, the mechanical strength of the planar structure remarkably decreases. Therefore, it is impossible to process the planar structure into a roll shape. In addition, the carbon fibers in the planar structure are likely to fall, and the carbon fibers that have fallen can cause damage to an electrolyte membrane in a fuel cell.

Another method for enlarging the voids of the planar structure composed of carbon fibers and a carbonized resin binder without greatly reducing the content of the carbonized resin binder component is a method of widening a distance between fibers by increasing the diameters of carbon fibers to be used (for example, PTLs 1 and 2). However, the carbon fibers having large fiber diameters used in PTLs 1 and 2 are only pitch-based carbon fibers.

Although the pitch-based carbon fibers have excellent conductivity, they are fragile and brittle compared to polyacrylonitrile-based carbon fibers (hereinafter, also referred to as "PAN-based carbon fibers"). Even in a continuous manufacturing step of a planar structure, the pitch-based carbon fibers are partially crushed to generate a fine powder. The fine powder generated by the crushing of the pitch-based carbon fibers causes damage to an electrolyte membrane in a fuel cell. There is a possibility that the fine powder may impair durability of the fuel cell, and a possibility that permeation or diffusion of gas may be hindered due to an increased bending degree of voids of the planar structure in a case where the fine powder remains in the planar structure.

From these viewpoints, there are many problems in using the planar structure composed mainly of carbon fibers consisting of pitch-based carbon fibers and a carbonized resin binder as the material of a gas diffusion layer for a fuel cell vehicle.

In addition, in recent years, redox flow batteries have been attracting attention as power storage cells. A redox flow cell includes an electrolytic cell in which the interior thereof is separated into a positive electrode chamber and a negative electrode chamber using a diaphragm through which hydrogen ions permeate, a positive electrode tank for storing a positive electrode electrolyte, a negative electrode tank for storing a negative electrode electrolyte, and a pump for circulating an electrolyte between the tanks and the electrolytic cell. Charging and discharging is performed by circulating the positive electrode electrolyte between the positive electrode tank and the positive electrode chamber, circulating the negative electrode electrolyte between the negative electrode tank and the negative electrode chamber, and allowing an oxidation-reduction reaction to progress on each electrode provided in the positive electrode chamber and the negative electrode chamber.

A carbon felt or a carbon fiber aggregate such as the planar structure composed of carbon fibers and a carbonized resin binder is used as an electrode (for example, PTLs 3 and 4).

There is a method for increasing diffusibility of an electrolyte by thinning an electrode as a method for improving a redox flow cell. However, the carbon felt generally has a thickness of several millimeters, and it is difficult to make it thinner than that.

On the other hand, the thickness of the planar structure composed of carbon fibers and a carbonized resin binder is generally several hundred micrometers, which is remarkably thin compared to the carbon felt, but the bulk density of the planar structure is higher than that of the carbon felt, and the planar structure does not always have excellent diffusibility of an electrolyte.

In order to improve the diffusibility of the electrolyte in the redox flow cell, it is effective to enlarge the voids of the planar structure composed of carbon fibers and a carbonized resin binder which becomes an electrode. However, as described above, in a case where pitch-based carbon fibers are simply used for the purpose of enlarging the fiber diameters of the carbon fibers, an electrolyte membrane in the redox flow cell may be damaged or diffusion of the electrolyte may be hindered similarly to the case where the planar structure is used as the material of a gas diffusion layer for a fuel cell vehicle.

On the other hand, a method for manufacturing a PAN-based carbon fiber having a large fiber diameter is known (for example, PTL 5).

Citation List

Patent Literature

[PTL 1] Japanese Unexamined Patent Application, First Publication No. H9-324390
[PTL 2] Japanese Unexamined Patent Application, First Publication No. 2013-16476
[PTL 3] Japanese Patent No. 3601581
[PTL 4] PCT International Publication No. WO2016/104613
[PTL 5] PCT International Publication No. WO2013/157612

Summary of Invention

Technical Problem

As described above, it is necessary for the gas diffusion layer of the fuel cell to have extremely high gas permeability and a high drainage property, and to have a material having a mechanical strength capable of withstanding continuous processing in a roll-to-roll manner. In addition, an electrode having excellent diffusibility of an electrolyte is desired for the redox flow cell.

The present inventors have conducted extensive studies with considering manufacturing a porous base material with satisfactory performance and continuous workability, using a planar structure as a material of a gas diffusion layer for a fuel cell vehicle or a material of an electrode for a redox flow cell, the planar structure being composed of carbon fibers and a carbonized resin binder, in which the carbon fibers, such as PAN-based carbon fibers, having sufficient strength even with large fiber diameters are used.

An object of the present invention is to provide a porous base material having high gas permeability and a high drainage property, high mechanical strength, and excellent diffusibility of an electrolyte.

Another object of the present invention is to provide a porous electrode using the porous base material and to provide carbon fiber paper which can be a raw material for the porous base material.

In addition, there is provided a method for manufacturing the porous base material and the carbon fiber paper.

Solution to Problem

That is, the present invention is disclosed in the claims.

Advantageous Effects of Invention

According to the present invention, it is possible to provide a porous base material having high gas permeability and drainage property, a large mechanical strength, and excellent diffusibility of an electrolyte.

In addition, it is possible to provide a porous electrode using the porous base material and to provide carbon fiber paper which can be a raw material for the porous base material.

In addition, it is possible to provide a method for manufacturing the porous base material and the carbon fiber paper.

Brief Description of Drawing

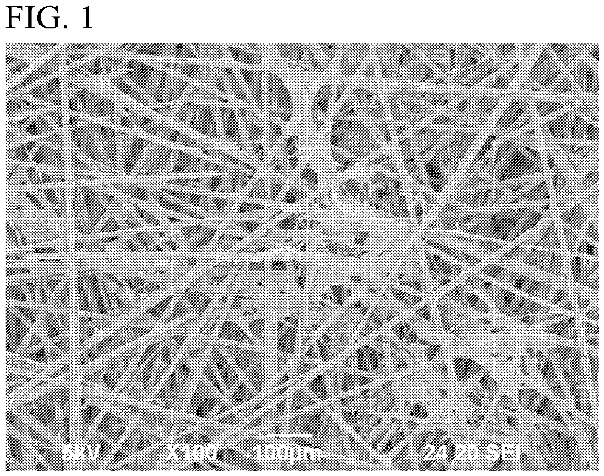

FIG. 1 is a scanning electron micrograph of a surface of a porous base material of the present invention.

Description of Embodiments

<Porous Base Material>

A porous base material of the present invention is formed by binding a carbon fiber (A) having an average fiber diameter of 10 to 20 $\mu$m, an average fiber length of 2 to 30 mm, a tensile modulus of elasticity of 200 to 600 GPa, and a tensile strength of 3,000 to 7,000 MPa with a carbon binder (D).

The porous base material of the present invention can be suitably used as an electrode base material or a porous electrode base material, in particular, a porous electrode base material for a fuel cell or a redox flow cell, due to its excellent gas permeability, excellent drainage property, high mechanical strength, and excellent diffusibility of an electrolyte.

The porous base material of the present invention preferably has a bulk density of 0.20 to 0.45 g/cm$^3$ and more preferably 0.30 to 0.40 g/cm$^3$.

In a case where the bulk density of the porous base material is greater than or equal to the lower limit value, the porous base material can have sufficient mechanical strength against bending, tension, and the like. Therefore, the porous base material is prevented from breaking during continuous processing in a roll-to-roll manner. In a case where the bulk density of the porous base material is less than or equal to the upper limit value, sufficient gas permeability is obtained.

The porous base material of the present invention preferably has a bending modulus of elasticity of 3.0 to 15.0 GPa and more preferably 3.0 to 10.0 GPa.

In a case where the bending modulus of elasticity of the porous base material is greater than or equal to the lower limit value, it is hard to hinder a flow of air, fuel gas, or an electrolyte due to deflection caused by a gas flow path in a cell. Therefore, deterioration in power generation performance hardly occurs. In a case where the bending modulus of elasticity of the porous base material is less than or equal to the upper limit value, it becomes easy to perform processing with a roll having a small diameter and it is easy to enhance workability in continuous roll-to-roll processing.

The bending modulus of elasticity of the porous base material depends on an alignment (anisotropy) of a carbon fiber in a plane of the porous base material (a direction which is not in the thickness direction of the porous base material), and increases as more carbon fibers are oriented. In a case of a batch type step of paper-making a dispersion obtained by dispersing a carbon fiber in a dispersion medium, which will be described below, the carbon fiber is not oriented in any directions in the plane of the porous base material. Therefore, the bending modulus of elasticity is isotropic.

On the other hand, in a case where, for example, a carbon fiber sheet is manufactured by a method including a continuous paper-making step using a continuous paper-making device or the like as will be described in examples of the present specification, the carbon fiber is easily oriented in a longitudinal direction (MD direction) of the paper-making device particularly in a case where a carbon fiber has a relatively short fiber length or the speed of the paper-making is fast. As a result, the bending modulus of elasticity of the obtained carbon fiber sheet in the MD direction becomes greater than that in the width direction (TD direction). In a case where the bending modulus of elasticity has such anisotropy, a higher value is taken as a bending modulus of elasticity of the porous base material.

The gas permeation coefficient of the porous base material of the present invention in the thickness direction is preferably 200 to 600 mL·mm/cm$^2$/hr/Pa and more preferably 250 to 450 mL·mm/cm$^2$/hr/Pa.

In a case where the gas permeation coefficient of the porous base material in the thickness direction is greater than or equal to the lower limit value, deterioration in power generation performance due to the fact that supplied air or fuel gas does not spread uniformly over the entire electrode hardly occurs. In a case where the gas permeation coefficient of the porous base material in the thickness direction is less than or equal to the upper limit value, deterioration in power generation performance under operation conditions of low humidity due to the fact that a cell easily dries up hardly occurs.

(Carbon Fiber)

The porous base material of the present invention contains a carbon fiber (A) as a carbon fiber.

[Carbon Fiber (A)]

The carbon fiber (A) is a carbon fiber having an average fiber diameter of 10 to 20 $\mu$m, an average fiber length of 2 to 30 mm, a tensile modulus of elasticity of 200 to 600 GPa, and a tensile strength of 3,000 to 7,000 MPa.

The carbon fiber is obtained by cutting a PAN-based carbon fiber with an average fiber diameter of 10 to 20

μm, a tensile modulus of elasticity of 200 to 600 GPa, and a tensile strength of 3,000 to 7,000 MPa, into appropriate lengths.

[Carbon Fiber (B)]

The porous base material of the present invention may further contain a carbon fiber (B) having an average fiber diameter of 3 to 9 μm, an average fiber length of 2 to 30 mm, a tensile modulus of elasticity of 200 to 600 GPa, and a tensile strength of 3,000 to 7,000 MPa as a carbon fiber from the viewpoint of controlling (finely adjusting) physical properties of the porous base material.

An example thereof includes a carbon fiber obtained by cutting a PAN-based carbon fiber with an average fiber diameter of 3 to 9 μm, a tensile modulus of elasticity of 200 to 600 GPa, and a tensile strength of 3,000 to 7,000 MPa, into appropriate lengths.

In order to obtain the carbon fiber chops, the following method is generally used.

A carbon fiber bundle formed by bundling several thousands to several tens of thousands of carbon fiber filaments is immersed in a sizing agent liquid and impregnated with the sizing agent. The collected filaments obtained by removing a solvent such as water in a subsequent drying step are cut to predetermined lengths using a roving cutter, a guillotine cutter, or the like to prepare carbon fiber chops.

The carbon fibers (A) and (B) used in the present invention can also be obtained through the same step. Regarding variations of the fiber lengths of the carbon fibers (A) and (B), in a case where the carbon fibers are cut using a roving cutter so that the average fiber length becomes about 3.0 mm, all the lengths of the carbon fibers fall between 1.5 mm and 4.5 mm.

In a case where the porous base material contains the carbon fiber (B) as a carbon fiber in addition to the carbon fiber (A), the mass of the carbon fiber (B) contained in the porous base material is preferably less than or equal to the mass of the carbon fiber (A) contained in the porous base material, more preferably less than or equal to one-half of the mass of the carbon fiber (A) contained in the porous base material, and still more preferably less than or equal to one-third of the mass of the carbon fiber (A) contained in the porous base material.

In a case where the mass of the carbon fiber (B) contained in the porous base material is within this range with respect to the mass of the carbon fiber (A) contained in the porous base material, it is possible to keep gas permeability or diffusibility of an electrolyte high by enlarging voids of the porous base material and to sufficiently secure stiffness of the porous base material.

[Characteristics of Carbon Fiber]

In the present invention, the average fiber diameter of carbon fibers may be obtained, for example, by photographing cross sections of the carbon fibers with a microscope such as a scanning electron microscope, enlarging the cross sections by a factor of 50 or more, selecting 50 different single fibers at random, and measuring the diameters thereof.

In a case of a carbon fiber having a flat cross section, that is, in a case where the cross section has a major axis and a minor axis, the major axis is defined as a fiber diameter of the fiber.

The average fiber length of the carbon fibers (A) and (B) is 2 to 30 mm and preferably 3 to 25 mm. In a case where the average fiber length of the carbon fibers (A) and (B) is within this range, sufficient dispersibility can be obtained.

The average fiber length may be obtained, for example, by photographing the carbon fibers with a microscope such as a scanning electron microscope, enlarging the carbon fibers by a factor of 50 or more, selecting 50 different single fibers at random, and measuring the lengths thereof.

The tensile modulus of elasticity of the carbon fibers (A) and (B) is 200 to 600 GPa and preferably 200 to 450 GPa.

The tensile modulus of elasticity can be obtained through a single fiber tensile test. In the single fiber tensile test, one single fiber is taken out from a carbon fiber bundle, and the modulus of elasticity of the single fiber is measured under the test conditions of a gauge length of 5 mm and a tensile speed of 0.5 mm/min using a universal tester. 50 single fibers may be selected from the same carbon fiber bundle and the modulus of elasticity of the single fibers may be measured to obtain an average value thereof.

The tensile strength of the carbon fibers (A) and (B) is 3,000 to 7,000 GPa and preferably 3,500 to 6,500 GPa.

The tensile strength can be obtained through a single fiber tensile test. In the single fiber tensile test, one single fiber is taken out from a carbon fiber bundle, and the strength of the single fiber is measured under the test conditions of a gauge length of 5 mm and a tensile speed of 0.5 mm/min using a universal tester. 50 single fibers may be selected from the same carbon fiber bundle and the strength of the single fibers may be measured to obtain an average value thereof.

The total content (also including a case where the porous base material does not contain the carbon fiber (B)) of the carbon fibers (A) and (B) in the porous base material with respect to the total mass (100 mass) of the porous base material is 40 to 80 mass% and preferably 50 to 70 mass%.

It is preferable that at least one of the carbon fiber (A) or (B) be a PAN-based carbon fiber, and it is more preferable that both be PAN-based carbon fibers.

[Other carbon fibers]

A carbon fiber (hereinafter, also referred to as a "carbon fiber (C)") such as a pitch-based carbon fiber or a rayon-based carbon fiber of which the tensile modulus of elasticity or the tensile strength is not within the ranges is not preferably contained in a case where the continuous workability of the porous base material is regarded as important.
However, it is acceptable for the carbon fiber (C) to be contained for the purpose of, for example, improving conductivity within a range in which the bending strength does not decrease by more than 20%. In this case, the carbon fiber (C) can also be contained as one type of carbon powder to be described below.
In a case where the porous base material contains the carbon fiber (C), the content of the carbon fiber (C) is preferably less than or equal to 10 mass% with respect to the total mass (100 mass%) of the porous base material.

(Carbon Binder (D))

The porous base material of the present invention contains a carbon binder (D), and the carbon fiber (A) is bound with the carbon binder (D).
The carbon binder (D) plays a role of binding carbon fibers in a porous base material regardless of the type of raw material. In the present invention, when carbon fibers are said to be bound with a binder, it means that the carbon fibers and the binder are in an approximately uniformly dispersed state and the plurality of carbon fibers are fixed to each other with the binder.
In the present invention, the carbon binder (D) refers to resin carbide formed by subjecting a resin to a carbonization treatment. It is preferable that the carbon binder (D) contain either or both of resin carbide and fibrous carbide in order to obtain a porous base material with high mechanical strength and from which a carbon fiber does not easily fall.
The fibrous carbide preferably contains either or both of carbide of a fibril-like fiber and carbide of a carbon fiber precursor fiber which will be described later. The carbon fiber is not included in the "fibrous carbide".
In a case where a resin and an organic fiber are subjected to a carbonization treatment to make a carbon binder (D), a carbon powder to be described below may be mixed therewith. For example, in a case where a carbonization treatment is performed by mixing a resin with a carbon powder, resin carbide and the carbon powder are collectively regarded as the carbon binder (D).
The ratio of the carbon binder (D) finally remaining in a porous base material as carbide varies depending on the type of resin, the amount of carbon binder (D) to be added to a carbon fiber sheet, and the presence or absence of a carbon powder.
The content of the carbon binder (D) in the mass (100 mass%) of the entire porous base material is 20 to 60 mass% and preferably 25 to 50 mass%. In a case where the content of the carbon binder (D) in the mass (100 mass%) of the entire porous base material is at least greater than or equal to the lower limit value, the mechanical strength required for handling the porous base material is secured, and a carbon fiber does not easily fall off. In a case where the content of the carbon binder (D) in the mass (100% by mass) of the entire porous base material is less than or equal to the upper limit value, it is possible to secure a space sufficient for a gas or liquid to permeate or diffuse.

[Resin]

A thermosetting resin which exhibits adhesiveness or flowability at normal temperatures, has a strong binding force with carbon fibers, and has a large residual weight during carbonization is preferable as a resin used as a raw material of the carbon binder (D).
This resin is contained in carbon fiber paper to be described below.
The thermosetting resin include a phenolic resin.
An example of the phenolic resin used as a raw material of the carbon binder (D) includes a resol type phenolic resin obtained through a reaction of phenols and aldehydes in the presence of an alkali catalyst.
In addition, a novolac type phenolic resin which is generated through a reaction of phenols and aldehydes in the presence of an acidic catalyst through a well-known method and exhibits thermal fusibility of a solid can be dissolved in or mixed into a resol type flowable phenolic resin. However, in this case, it is preferable to use a self-crosslinkable type resin containing hexamethylenediamine as a curing agent.
A commercially available product can also be used as the phenolic resin.
Examples of phenols include phenol, resorcin, cresol, and xylol.
The phenols may be used alone, or two or more kinds of phenols may be used in combination.
Examples of aldehydes include formalin, paraformaldehyde, and furfural.

The aldehydes may be used alone, or two or more kinds of aldehydes may be used in combination.

For the phenolic resin, an organic solvent may be used as a solvent, or a water-dispersible phenolic resin or a water-soluble phenolic resin may be used.

A resol type phenolic resin emulsion disclosed in Japanese Unexamined Patent Application, First Publication Nos. 2004-307815 and 2006-56960, or a known water-dispersible phenolic resin also known as an aqueous dispersion can be used as the water-dispersible phenolic resin, for example.

Specific examples of the known water-dispersible phenolic resin also known as an aqueous dispersion include PHENOLITE (registered trademark) TD-4304 and PE-602 which are trade names manufactured by DIC CORPORATION, SUMILITE (registered trademark) PR-14170, PR-55464, and PR-50607B which are trade names manufactured by Sumitomo Bakelite Co., Ltd., or SHONOL (registered trademark) BRE-174 manufactured by SHOWADENKO K.K.

It is possible to use, for example, a well-known water-soluble phenolic resin such as a resol type phenolic resin which has favorable water solubility and is shown in Japanese Unexamined Patent Application, First Publication No. 2009-84382, as the water-soluble phenolic resin.

Specific examples thereof include PHENOLITE (registered trademark) GG-1402 which is the trade name of a product manufactured by DIC CORPORATION, RESITOP (registered trademark) PL-5634 which is the trade name of a product manufactured by Gunei Chemical Industry Co., Ltd., SUMILITE RESIN (registered trademark) PR-50781, PR-9800D, and PR-55386 which are the trade names of products manufactured by Sumitomo Bakelite Co., Ltd., or SHONOL (registered trademark) BRL-1583 and BRL-120Z which are the trade names of products manufactured by SHOWADENKO K.K.

From the viewpoints of handling properties and production cost, it is preferable to use an aqueous dispersion or a commercially available product easily obtained in a granular form as a form of acquiring a water-dispersible phenolic resin or a water-soluble phenolic resin.

[Organic Fiber]

A fiber such as a carbon fiber precursor fiber which has a relatively large residual weight after carbonization or a fiber such as a fibril-like fiber as a carbon fiber that can be bound in a net shape is preferable as an organic fiber used as a raw material of the carbon binder (D).

In a case of manufacturing a carbon fiber sheet, polyvinyl alcohol (PVA), a thermally fusible polyester-based or polyolefin-based organic polymer binder, or the like may be used. However, an organic fiber which does not remain after carbonization or does not have a net shape is not included among the organic fibers defined here.

• Carbon Fiber Precursor Fiber

A polymer having a residual mass of greater than or equal to 20 mass% in a carbonization treatment step is preferable as a polymer forming a carbon fiber precursor fiber as the organic fiber used as a raw material of the carbon binder (D) from the viewpoint of maintaining a sheet shape after carbonization. Examples of such a polymer include an acrylic polymer, a cellulosic polymer, and a phenolic polymer.

A homopolymer of acrylonitrile or a copolymer of acrylonitrile and another monomer is preferable as the acrylic polymer forming a carbon fiber precursor fiber.

The monomer copolymerized with acrylonitrile is not particularly limited as long as it is an unsaturated monomer forming a general acrylic fiber, and examples thereof include acrylic acid esters represented by methyl acrylate, ethyl acrylate, isopropyl acrylate, n-butyl acrylate, 2-ethylhexyl acrylate, 2-hydroxyethyl acrylate, and hydroxypropyl acrylate; methacrylic acid esters represented by methyl methacrylate, ethyl methacrylate, isopropyl methacrylate, n-butyl methacrylate, isobutyl methacrylate, t-butyl methacrylate, n-hexyl methacrylate, cyclohexyl methacrylate, lauryl methacrylate, 2-hydroxyethyl methacrylate, hydroxypropyl methacrylate, and diethylaminoethyl methacrylate; acrylic acid, methacrylic acid, maleic acid, itaconic acid, acrylamide, N-methylol acrylamide, diacetone acrylamide, styrene, vinyl toluene, vinyl acetate, vinyl chloride, vinylidene chloride, vinylidene bromide, vinyl fluoride, and vinylidene fluoride.

In addition, it is preferable to use an acrylic polymer containing greater than or equal to 50 mass% of acrylonitrile units in a case of considering spinnability, when considering fiber elasticity, fiber strength, or a point that it is possible to join carbon fibers from a low temperature to a high temperature and the residual mass during a carbonization treatment is large.

The weight average molecular weight of an acrylonitrile polymer used for a carbon fiber precursor fiber is not particularly limited, but is preferably 50,000 to 1,000,000. In a case where the weight average molecular weight is greater than or equal to 50,000, the spinnability improves and at the same time the quality of the fiber tends to become favorable. In a case where the weight average molecular weight is less than or equal to 1,000,000, the polymer concentration at which an optimum viscosity of a spinning dope is provided increases and the productivity tends to be improved. The weight average molecular weight can be measured, for example, through a method such as gel permeation chromatography (GPC).

Examples of a fiber made of a cellulosic polymer used as a carbon fiber precursor fiber include lyocell, tencel, rayon, fine cellulose, and other cellulose extracted from raw vegetable materials.

The average fiber length of carbon fiber precursor fibers is preferably 2 to 30 mm, because favorable dispersibility can be obtained. The carbon fiber precursor fibers having an average fiber length within this range can be obtained by cutting a long fibrous carbon fiber precursor fiber to a suitable length.

The average fiber diameter of the carbon fiber precursor fibers is preferably 1 to 5 $\mu$m.

In a case where the average fiber diameter of the carbon fiber precursor fibers is greater than or equal to the lower limit value, excellent spinnability can be obtained. In a case where the average fiber diameter of the carbon fiber precursor fibers is less than or equal to the upper limit value, it is easy to suppress breakage due to shrinkage in a heating and pressurizing step or a carbonization treatment step.

The cross-sectional shapes of the carbon fiber precursor fibers are not particularly limited, but it is preferable that the roundness be high since the mechanical strength after carbonization is high and the production cost can be suppressed.

. Fibril-Like Fiber

A fibril-like fiber as an organic fiber used as a raw material of the carbon binder (D) indicates an entire fiber which is obtained such that a fibril as a constituent element of a fiber such as a filament or a staple is partially branched from the fiber. At this time, the fiber which becomes an origin of the branch can be called a "stem" of a fibril-like fiber (hereinafter, the fiber which becomes an origin of the branch of the fibril-like fiber is also called a "stem" and the branched fibril is also called a "fibril portion").

The fibril-like fiber plays a role of preventing re-collection of carbon fibers by being dispersed together with the carbon fibers, and making the carbon fiber paper into independent sheets.

In addition, in a thermosetting resin (for example, a phenolic resin) used as a resin in a combination, there is a resin which may exert an influence on the physical properties or appearance of carbon fiber paper (for example, the temperature of the carbon fiber paper decreases due to evaporation heat of condensed water, or the shape of the carbon fiber paper is deformed by a water vapor pressure) by generating the condensed water at the time of curing a resin through heating and pressurizing. A role of suppressing the influence by absorbing the condensed water can also be expected.

Accordingly, a fibril-like fiber also having excellent affinity with water is preferable.

Specific examples of fibril-like fibers include synthetic pulp such as fibrillated polyethylene fiber, acrylic fiber, and aramid fiber.

In addition, fibril-like purified cellulose fibers obtained by subjecting the lyocell or tencel, or fine cellulose to a beating treatment may be used. These are preferable from the viewpoint that the metal content is smaller than a natural cellulose fiber and proton conduction inhibition in a fuel cell or deterioration of a fluorine electrolyte membrane is prevented.

Furthermore, an organic solvent is more preferable than an inorganic solvent as a solvent to be used for a spinning dope or a spinning bath from the viewpoint of preventing metal contamination at the time of spinning,

The fibril-like fiber may be one having residual carbon (which remains as carbon) after a carbonization treatment or one having no residual carbon (which does not remain as carbon) after a carbonization treatment. However, in a case of using a fibril-like fiber without residual carbon, it is preferable to use a resin in combination to leave a form derived from the fibril-like fiber.

The average fiber length of fibril-like fiber stems is preferably 0.5 to 20 mm.

In a case where the average fiber length of the fibril-like fiber stems is greater than or equal to the lower limit value, it is easy to secure the mechanical strength of a resin-added carbon fiber sheet. In a case where the average fiber length of the fibril-like fiber stems is less than or equal to the upper limit value, favorable dispersibility can be easily obtained.

The average fiber diameter of fibril-like fiber stems is preferably 1 to 50 mm.

In a case where the average fiber diameter of the fibril-like fiber stems is greater than or equal to the lower limit value, favorable dispersibility is obtained. In a case where the average fiber diameter of the fibril-like fiber stems is less than or equal to the upper limit value, it is easy to suppress breakage due to shrinkage during heat treatment.

The average fiber diameter of fibril portions of fibril-like fibers is preferably 0.01 to 30 $\mu$m.

In a case where the average fiber diameter of the fibril portions of the fibril-like fibers is greater than or equal to the lower limit value, it is easy to secure dehydration properties at the time of manufacturing carbon fiber paper or gas permeability of a porous base material. In a case where the average fiber diameter of the fibril portions of the fibril-like fibers is less than or equal to the upper limit value, favorable dispersibility is obtained.

(Carbon Powder)

The porous base material of the present invention may further contain carbon powder.

In a case where the porous base material further contains a carbon powder, improvement in conductivity can be expected.

In a case where the porous base material contains a carbon powder, the content of the carbon powder with respect to the total mass (100 mass%) of the porous base material is preferably 1 to 50 mass% and more preferably 5 to 30 mass%.

In a case where the content of the carbon powder in the total mass of the porous base material is greater than or equal to the lower limit value, a conductive path is formed by the carbon powder. Therefore, it is easy to improve the conductivity. In a case where the content of the carbon powder in the total mass of the porous base material is less than or equal to the upper limit value, the porous base material becomes brittle or hard to bend.

In a case where the content of the carbon powder in the total mass of the porous base material in an electrode for a redox flow cell is greater than or equal to the lower limit value, the specific surface area of carbon fiber paper increases due to a concave-convex surface derived from the carbon powder, which is effective in contributing to improvement in reactivity. In a case where the content of the carbon powder in the total mass of the porous base material in an electrode for a redox flow cell is less than or equal to the upper limit value, it is possible to maximize the specific surface area of carbon fiber paper without blocking a diffusion path of an electrolyte.

In a case where the porous base material contains a carbon powder, it is preferable to add the carbon powder together with a solution or a dispersion of a resin.

From the viewpoints of handling properties and production cost, it is preferable to use water, an alcohol, dimethylformamide, dimethylacetamide, or a mixture thereof as a dispersion medium.

In a case of using water as a dispersion solvent, it is possible to use a dispersant such as a surfactant in order to disperse a resin or carbon powder.

It is possible to use polyethers, such as a nonionic polyoxyethylene alkyl phenyl ether, fatty acid diethanolamide based on a fatty acid, and the like as the dispersant.

In a case where the foaming properties are not high, an ionic (anionic, cationic, or zwitterionic) dispersant may be used. However, even in this case, it is preferable to select one containing no metal ions such as sodium in which there is a possibility of damaging a carbonization furnace in a subsequent carbonization step.

Examples of the carbon powder include a graphite powder, carbon black, a milled fiber, carbon nanotubes, carbon nanofibers, coke, activated carbon, amorphous carbon, or a mixture thereof. Excellent conductivity is easily exhibited using these.

The graphite powder is formed of a highly crystalline graphite structure, and the average particle diameter of primary particles thereof is generally several micrometers to several hundreds of micrometers.

It is possible to use pyrolytic graphite, spherical graphite, flaky graphite, bulky graphite, earthy graphite, artificial graphite, expanded graphite, and the like as the graphite powder, and pyrolytic graphite, spherical graphite, or flaky graphite is preferable from the viewpoint of development of conductivity.

Carbon black forms structures in which primary particles generally having an average particle diameter of several tens of nanometers are fused to each other, and is present as a structural body (agglomerate) obtained such that the structures are further bonded to each other using van der Waals force.

The number of particles in carbon black per unit mass is significantly larger than that in graphite powder, and agglomerates are connected to each other in a three-dimensional network shape at a certain critical concentration or more to form a macroscopic conductive path.

Acetylene black (for example, DENKA BLACK (registered trademark) manufactured by Denka Company Limited), ketjen black (for example, Ketjen Black EC manufactured by Lion Corporation), furnace black (for example, VULCAN XC 72 manufactured by CABOT), channel black, lamp black, thermal black, and the like can be used as carbon black.

A milled fiber manufactured by pulverizing a virgin carbon fiber may be used or a milled fiber manufactured from recycled products such as a carbon fiber reinforced thermosetting resin molded product, a carbon fiber reinforced thermoplastic resin molded product, and a prepreg may be used.

The carbon fiber which is a raw material of milled fiber may be a PAN-based carbon fiber, a pitch-based carbon fiber, or a rayon-based carbon fiber.

<Method for Manufacturing Porous Base Material>

The porous base material of the present invention can be manufactured by a method for manufacturing a porous base material including Steps 1 to 4. In addition, the porous base material of the present invention includes a porous base material manufactured by the method for manufacturing a porous base material including Steps 1 to 4.

The carbon fiber paper of the present invention can be manufactured by a method for manufacturing carbon fiber paper including Steps 1 to 3. In addition, the carbon fiber paper of the present invention includes carbon fiber paper manufactured by the method for manufacturing carbon fiber paper including Steps 1 to 3.

Step 1 (Step of Manufacturing Carbon Fiber Sheet):

A step of manufacturing a carbon fiber sheet by paper-making a dispersion obtained by dispersing carbon fibers in a dispersion medium.

Step 2 (Step of Manufacturing Resin-Added Carbon Fiber Sheet):

A step of manufacturing a resin-added carbon fiber sheet by adding a resin to the carbon fiber sheet manufactured in Step 1.

Step 3 (Step of Manufacturing Carbon Fiber Paper):

A step of manufacturing carbon fiber paper by heating and pressurizing the resin-added carbon fiber sheet manufactured in Step 2.

Step 4 (Step of Manufacturing Porous Base Material):

A step of manufacturing a porous base material by subjecting the carbon fiber paper manufactured in Step 3 to a carbonization treatment.

That is, the method for manufacturing a porous base material of the present invention is a method for manufacturing a porous base material including: a step of manufacturing a carbon fiber sheet by paper-making a dispersion obtained by dispersing carbon fibers in a dispersion medium; a step of manufacturing a resin-added carbon fiber sheet by adding either or both of a resin and an organic fiber to the obtained carbon fiber sheet; a step of manufacturing carbon fiber paper by heating and pressurizing the obtained resin-added carbon fiber sheet; and a step of manufacturing a porous base material by subjecting the obtained carbon fiber paper a carbonization treatment.

The porous base material of the present invention contains a carbon fiber (A) as described above. Accordingly, the carbon fiber (A) is included in the above-described method for manufacturing a porous base material of the present invention as a carbon fiber.

In addition, the porous base material of the present invention may further contain a carbon fiber (B) in addition to the carbon fiber (A) as described above. Accordingly, the method for manufacturing a porous base material according to an aspect of the present invention includes a method in which the carbon fiber (A) is mixed with the carbon fiber (B) to obtain a carbon fiber mixture, and the obtained carbon fiber mixture is used as a carbon fiber in the above-described method. In this case, the mass of the carbon fiber (B) in the carbon fiber mixture is preferably less than or equal to the mass of the carbon fiber (A) in the carbon fiber mixture.

When mixing the carbon fiber (A) with the carbon fiber (B), the carbon fibers may be mixed with each other or may be mixed in a state in which one or both of the carbon fibers are dispersed in a dispersion medium.

In addition, the method for manufacturing carbon fiber paper of the present invention is a method for manufacturing carbon fiber paper including: a step of manufacturing a carbon fiber sheet by paper-making a dispersion obtained by dispersing carbon fibers in a dispersion medium; a step of manufacturing a resin-added carbon fiber sheet by adding either or both of a resin and an organic fiber to the obtained carbon fiber sheet; and a step of manufacturing carbon fiber paper by heating and pressurizing the obtained resin-added carbon fiber sheet.

As will be described below, the carbon fiber paper of the present invention contains a carbon fiber (A). Accordingly, the carbon fiber (A) is included in the above-described method for manufacturing carbon fiber paper of the present invention as a carbon fiber.

In addition, the carbon fiber paper of the present invention may further contain a carbon fiber (B) in addition to the carbon fiber (A) as will be described below. Accordingly, the method for manufacturing carbon fiber paper according to an aspect of the present invention includes a method in which the carbon fiber (A) is mixed with the carbon fiber (B) to obtain a carbon fiber mixture, and the obtained carbon fiber mixture is used as a carbon fiber in the above-described method. In this case, the mass of the carbon fiber (B) in the carbon fiber mixture is preferably less than or equal to the mass of the carbon fiber (A) in the carbon fiber mixture.

When mixing the carbon fiber (A) with the carbon fiber (B), the carbon fibers may be mixed with each other or may be mixed in a state in which one or both of the carbon fibers are dispersed in a dispersion medium.

The total content (also including a case where the carbon fiber paper does not contain the carbon fiber (B)) of the carbon fibers (A) and (B) in the carbon fiber paper with respect to the total mass (100 mass) of the carbon fiber paper is 20 to 60 mass% and preferably 30 to 50 mass%.

In general, a sheet-like article such as a planar structure containing carbon fibers is referred to as carbon fiber paper in a broad sense. In the present specification, an article which contains carbon fibers and a binder such as a resin and is obtained by binding the carbon fibers with a binder such as a resin is referred to as carbon fiber paper.

In addition, an article which contains carbon fibers and a binder such as a resin, but in which the carbon fibers are not bound with a binder such as a resin is referred to as a resin-added carbon fiber sheet, and an article which does not substantially contain a binder such as a resin and in which, for example, only carbon fibers are used for paper-making is referred to as a carbon fiber sheet.

[Step 1 (Step of Manufacturing Carbon Fiber Sheet)]

Step 1 is a step of manufacturing a carbon fiber sheet by paper-making a dispersion obtained by dispersing carbon fibers in a dispersion medium.

The carbon fibers which are raw materials are as described above.

The dispersion medium that can be used is not particularly limited as long as a dispersoid does not dissolve therein, and examples thereof include: water; organic solvents such as methanol, ethanol, ethylene glycol, and propylene glycol; or a mixture thereof. From the viewpoint of productivity, it is preferable to use water as the dispersion medium. The water may be deionized water.

In Step 1, a carbon fiber and an organic fiber (including a carbon fiber precursor fiber or a fibril-like fiber) may be dispersed in a dispersion medium to form a dispersion. In addition, paper-making may be performed after further adding a binder such as an organic polymer binder (such as polyvinyl alcohol) to the dispersion. The binder containing the organic polymer binder may be in a liquid state or a solid state such as fibers and particles.

Fibril-like fibers themselves intertwine with carbon fibers, thereby improving the strength of a carbon fiber sheet and carbon fiber paper. In addition, in a case where a carbon fiber precursor fiber is further mixed therewith at the same time, it is also possible to make the mixture substantially free of a binder.

In a case of using a carbon fiber precursor fiber or an organic fiber containing a fibril-like fiber, the proportion of the mass of the organic fiber to the mass of the carbon fiber sheet is preferably 5% to 50% and more preferably 10 to 40%.

A carbon fiber sheet obtained through paper-making is preferably dried at 90°C to 120°C before performing Step 2. This step is referred to as a first drying step for convenience.

In Step 1, it is possible to obtain a carbon fiber sheet by dispersing carbon fibers and fibril-like fibers in water, and/or to encourage opening of a carbon fiber into a single fiber and to increase the strength of the carbon fiber sheet by performing a step of subjecting carbon fiber sheets to an interlacing treatment (hereinafter, also referred to as an "interlacing treatment step") between Step 1 and Step 2, which is preferable.

In the case of performing the interlacing treatment step, it is preferable to dry the carbon fiber sheets which have been subjected to the interlacing treatment after the interlacing treatment step at 20°C to 200°C before performing Step 2 from the viewpoint of removing a dispersion medium. This step is referred to as a second drying step for convenience.

In Step 1, the carbon fiber sheet can be produced by either a continuous method or a batch method, but is preferably manufactured by a continuous method from the viewpoints of productivity and mechanical strength of the carbon fiber sheet.

The basis weight of the carbon fiber sheet manufactured in Step 1 is preferably about 10 to 200 g/m$^2$. In addition, the thickness of the carbon fiber sheet is preferably about 20 to 500 $\mu$m.

• Interlacing Treatment Step

In a case where organic fibers containing carbon fiber precursor fibers or fibril-like fibers are dispersed together with carbon fibers, it is possible to form a carbon fiber sheet having an interlaced structure (hereinafter, also referred to as an "interlaced structural body") in which carbon fibers and organic fibers are three-dimensionally interlaced, by subjecting the carbon fiber sheet to an interlacing treatment.

The interlacing treatment can be performed by selecting a method from methods of forming an interlaced structure as necessary, and is not particularly limited. The interlacing treatment can be performed through a mechanical interlacement method such as a needle punching method, a high-pressure liquid injection method such as a water-jet punching method, a high-pressure gas injection method such as a steam jet punching method, or a combined method thereof.

It is possible to easily suppress breakage of carbon fibers through an interlacing treatment, and a high-pressure liquid injection method from the viewpoint of easily obtaining interlacing appropriate properties.

Hereinafter, the high-pressure liquid injection method will be described in detail.

The high-pressure liquid injection method is an interlacing treatment method in which a carbon fiber sheet is placed on a support member having a substantially smooth surface, and a liquid columnar flow, a liquid fan-like flow, a liquid slit flow, and the like to be injected act at a pressure, for example, greater than or equal to 1 MPa to interlace the carbon fibers in the carbon fiber sheet.

In a case where organic fibers are dispersed together with carbon fibers in Step 1, the carbon fibers are interlaced with the organic fibers. Here, a support member having a substantially smooth surface can be selected as necessary from ones in which there is no pattern of a support member formed on an obtained interlaced structural body and an injected liquid is rapidly removed. Specific examples thereof include a 30- to 200-mesh wire net, a plastic net, or a roll. From the viewpoint of productivity, it is preferable to continuously perform an interlacing treatment through a high-pressure liquid injection treatment or the like after a carbon fiber sheet is manufactured on a support member having a substantially smooth surface.

The interlacing treatment of a carbon fiber sheet performed through high-pressure liquid injection may be repeated plural times. That is, after the high-pressure liquid injection treatment of a carbon fiber sheet is performed, a carbon fiber sheet may be further stacked thereon to perform the high-pressure liquid injection treatment, or the carbon fiber sheet having an interlaced structure being formed may be turned inside out to perform the high-pressure liquid injection treatment from an opposite side. In addition, these operations may be repeated.

A liquid to be used for the high-pressure liquid injection treatment is not particularly limited as long as fibers to be treated are dissolved, but is preferably water or deionized water. The water may be warm water.

The hole diameter of each injection nozzle of high-pressure liquid injection nozzles is preferably 0.06 to 1.0 mm and more preferably 0.1 to 0.3 mm in a case of a columnar flow.

The distance between the nozzle injection holes and a stacked body is preferably 0.5 to 5 cm.

From the viewpoint of interlacing fibers, the pressure of a liquid is preferably greater than or equal to 1 MPa and more preferably greater than or equal to 1.5 MPa. The interlacing treatment may be performed on one row or a plurality of rows. In a case where the interlacing treatment is performed on a plurality of rows, it is effective to increase the pressure in the high-pressure liquid injection treatment after a second row rather than a first row from the viewpoint of maintaining the forms of carbon fiber papers.

When interlaced structural bodies are continuously manufactured, in some cases, a streak-like trajectory pattern is formed in a sheet-forming direction (longitudinal direction of a sheet) to generate a dense structure in a sheet width direction. However, it is possible to suppress the trajectory pattern by vibrating high-pressure liquid injection nozzles include nozzle holes with one row or a plurality of rows. It is possible to impart a tensile strength in the sheet width direction by suppressing the streak-like trajectory pattern in the sheet-forming direction.

In addition, in a case where a plurality of high-pressure liquid injection nozzles including nozzle holes with one row or a plurality of rows, it is possible to suppress periodic patterns appearing in the interlaced structural bodies by controlling the frequency at which the high-pressure liquid injection nozzles are caused to vibrate in the sheet width direction or its phase difference.

Furthermore, a drying treatment may be performed after the high-pressure liquid injection treatment. In the case of performing the drying treatment, the set temperature can be set, for example, to 20°C to 200°C from the viewpoint of removing a dispersion medium from a carbon fiber sheet (interlaced structural body) which has been subjected to an interlacing treatment.

The time for the drying treatment can be set, for example, to 1 minute to 24 hours.

A heat treatment using a high-temperature atmosphere furnace or a far-infrared heating furnace, a direct heat treatment using a hot plate or a hot roll, or the like can be applied as a heat source of the drying treatment. A drying treatment using a high-temperature atmosphere furnace or a far-infrared heating furnace is preferable from the viewpoint that it is possible to suppress attachment of fibers forming a carbon fiber sheet subjected to an interlacing treatment to a heat source.

In a case where interlaced structural bodies manufactured continuously are subjected to a drying treatment, it is preferable to continuously perform the drying treatment over the whole length of each of the interlaced structural bodies from the viewpoint of production cost. Accordingly, Step 2 can be performed continuously.

[Step 2 (Step of Manufacturing Resin-Added Carbon Fiber Sheet)]

Step 2 is a step of manufacturing a resin-added carbon fiber sheet by adding a resin to the carbon fiber sheet manufactured in Step 1.

A resin to be added to a carbon fiber sheet is as described above.

The ratio of the attachment amount of resins to a carbon fiber sheet (weight ratio of resin solid content / carbon fiber sheet) is preferably 50% to 110% and more preferably 55% to 100%.

By setting the attachment amount of resins to a carbon fiber sheet to be greater than or equal to the lower limit value, the mechanical strength of an obtained porous base material is increased, and the continuous workability is improved. By setting the attachment amount of resins to a carbon fiber sheet to be less than or equal to the upper limit value, the porosity of an obtained porous base material and the gas permeability can be favorably maintained.

The resin-added carbon fiber sheet is obtained by adding a resin to a carbon fiber sheet and is a sheet from which a solvent is removed in a case where the solvent is used at the time of adding a resin.

In addition, the "solid content" of the resin solid content is a "nonvolatile content" and refers to an evaporation residue remaining after heating a dispersion of a resin to volatilize water, other solvents, or volatile monomers. Nonvolatile monomers or low molecular compounds such as oligomers are also contained in the solid content.

In Step 2, a dispersion in which a resin is mixed with a carbon powder may be added to a carbon fiber sheet when adding the resin to the carbon fiber sheet. The carbon powder that can be used is as described above.

The ratio of the mass of the carbon powder to the mass of the resin solid content (carbon powder / resin solid content) is preferably 1% to 50% and more preferably 5% to 45% from the viewpoint of development of conductivity or handling properties, although the ratio also depends on the particle size distribution or viscosity of a resin, the particle size distribution or bulkiness of the carbon powder, and easiness of aggregation.

A sufficient effect of improving conductivity is obtained by setting the ratio of the mass of the carbon powder to the mass of the resin solid content to be greater than or equal to the lower limit value. Even if the ratio of the mass of the carbon powder to the mass of the resin solid content exceeds the upper limit value, the effect of improving conductivity tends to be saturated. Therefore, it is possible to reduce production cost by setting the ratio of the mass of the carbon powder to the mass of the resin solid content to be less than or equal to the upper limit value.

Examples of the method for adding a dispersion of a resin or a dispersion in which a resin is mixed with a carbon powder (hereinafter, also simply collectively referred to as a "dispersion") to a carbon fiber sheet include the following methods.

• First Method

The first method is a method for discharging a dispersion to a carbon fiber sheet (spraying a dispersion on or adding it dropwise to a carbon fiber sheet, or allowing a dispersion to flow down over a carbon fiber sheet).

Specific examples thereof include a method of spraying a dispersion on or adding it dropwise to the surface of a carbon fiber sheet using a spray nozzle and a method of allowing a dispersion to flow down over the surface of a carbon fiber sheet using a discharge type coater such as a curtain coater to uniformly coat the surface of the carbon fiber sheet with the dispersion. In addition, the surface of the carbon fiber sheet may be uniformly coated with a dispersion using a coater such as a kiss coater.

The method for supplying a dispersion is not particularly limited, but it is possible to use, for example, a pressure feeding system using a pressurizing tank, quantitative supply system using a pump, and a solvent sucking system using a self-sucking pressure.

In a case of spraying a dispersion, it is preferable to use a two-fluid nozzle, in which a liquid agent flow path and a gas flow path are separated from each other, as a nozzle from the viewpoints that the flow paths are hardly clogged and the maintenance is easy. It is preferable to use, for example, a double-tube nozzle or a vortex type nozzle which is shown in Japanese Unexamined Patent Application, First Publication No. 2007-244997 or the like as such a nozzle. The gas used for spraying is not particularly limited as long as it does not chemically react with a resin or carbon powder or promote resin curing. In general, it is preferable to use compressed air.

In a case of adding a dispersion dropwise, it is possible to use a high-pressure liquid injection nozzle as a nozzle in addition to the spray nozzle or a needle tube-like nozzle generally known as a needle for dropwise addition. It is preferable to use a nozzle having an aperture that is large enough not to be clogged by a resin or carbon powder.

It is possible to use a diaphragm (nipping) device in order to allow a dispersion to be discharged into a carbon fiber sheet or to remove an excess resin or carbon powder to make the attachment amount thereof to a carbon fiber sheet constant.

In addition, instead of nipping, a dispersion may be allowed to permeate into a carbon fiber sheet by blowing gas onto the surface of a carbon fiber sheet to which a dispersion is discharged (for example, sprayed) or sucking from a rear side of the surface of a carbon fiber sheet to which a dispersion is discharged.

By continuously performing these steps, it is possible to make the attachment amount of a resin and carbon powder to a carbon fiber sheet constant.

Furthermore, a drying treatment may be performed on a resin-added carbon fiber sheet after adding a dispersion thereto.

In the case of performing the drying treatment on the resin-added carbon fiber sheet, the set temperature can be set, for example, to 90°C to 120°C from the viewpoint of removing a dispersion medium or an unreacted monomer from the resin-added carbon fiber sheet.

The time for the drying treatment can be set, for example, to 1 minute to 24 hours.

A heat treatment using a high-temperature atmosphere furnace or a far-infrared heating furnace, a direct heat treatment using a hot plate or a hot roll, or the like can be applied as a heat source of the drying treatment. The drying is preferably performed through a heat treatment using a high-temperature atmosphere furnace or a far-infrared heating furnace from the viewpoint that it is possible to suppress attachment of a thermosetting resin to a heat source.

In a case where resin-added carbon fiber sheets manufactured continuously are subjected to a drying treatment, it is preferable to continuously perform the drying treatment over the whole length of each of the resin-added carbon fiber sheets from the viewpoint of production cost. Accordingly, Step 3 (a step of manufacturing carbon fiber paper) can be performed continuously.

The addition of a dispersion may be repeated plural times. That is, once a dispersion is added and dried through the drying treatment method, a dispersion may be added to the same surface or an opposite surface and dried again. This may be repeated many times. The number of times a dispersion is added is not particularly limited, but is preferably small from the viewpoint of reducing production cost.

In a case where addition of a dispersion is performed plural times, the same resin to be added may be used or resins having different compositions or concentrations may be used. In addition, the same carbon powder may be used or different types of carbon powders or those having different compositions may be used. In addition, the addition amount of a resin and a carbon powder may be uniform in a thickness direction of a carbon fiber sheet or there may be a concentration gradient.

• Second Method

The second method is a method in which a separately manufactured resin film or a film made of a mixture of a resin and carbon powder is overlapped on a carbon fiber sheet, and is fused or press-bonded.

In this method, a release paper is coated with a dispersion to make a resin film or a film made of a mixture of a resin and carbon powder. Thereafter, in the method, the film is stacked on a carbon fiber sheet, and any of a heat treatment, a pressurization treatment, or a heating and pressurizing treatment is performed to add a resin and optionally a carbon powder to the carbon fiber sheet.

[Step 3 (Step of Manufacturing Carbon Fiber Paper)]

Step 3 is a step of manufacturing carbon fiber paper of the present invention by heating and pressurizing the resin-added carbon fiber sheet manufactured in Step 2.

The carbon fiber paper of the present invention is formed such that the carbon fiber (A) described above is bound with either or both of a resin and an organic fiber. The carbon fiber paper of the present invention becomes a porous base material of the present invention such that either or both of a resin or an organic fiber becomes a carbon binder (D) which binds the carbon fiber (A) by subjecting the resin or the organic fiber to a carbonization treatment in Step 4 to be described below.

Accordingly, the carbon fiber paper of the present invention contains a material contained in the porous base material of the present invention which has not yet been subjected to a carbonization treatment.

Specifically, the carbon fiber paper of the present invention may further contain the carbon fiber (B) described above as a carbon fiber.

In a case where the carbon fiber paper contains the carbon fiber (B) as a carbon fiber in addition to the carbon fiber (A), the mass of the carbon fiber (B) contained in the carbon fiber paper is preferably less than or equal to the mass of the carbon fiber (A) contained in the carbon fiber paper, more preferably less than or equal to one-half of the mass of the carbon fiber (A) contained in the carbon fiber paper, and still more preferably less than or equal to one-third of the mass of the carbon fiber (A) contained in the carbon fiber paper.

It is preferable that at least one of the carbon fiber (A) or (B) be a PAN-based carbon fiber, and it is more preferable that both be PAN-based carbon fibers.

In addition, other carbon fibers are also allowed to be contained in the carbon fiber paper of the present invention similarly to the case where the porous base material of the present invention is allowed to contain other carbon fibers described above.

In addition, carbon powder is also allowed to be contained in the carbon fiber paper of the present invention similarly to the case where the porous base material of the present invention is allowed to contain the carbon powder described above.

In Step 3, after flowing of a resin contained in a resin-added carbon fiber sheet, the resin is cured (cross-linked) to obtain carbon fiber paper with a smooth surface and a uniform thickness.

In a case where fibril-like fibers are dispersed together with carbon fibers in Step 1, Step 3 also has the effect of fusing the carbon fibers with the fibril-like fibers.

The temperature for heating is 180°C to 360°C.

In a case where the temperature for heating and pressurizing is set to be higher than or equal to the lower limit value, a crosslinking reaction of a phenolic resin proceeds sufficiently, the amount of residual carbon after carbonization hardly decreases, and formation of a phase separation structure is not easily affected. In a case where the temperature for heating and pressurizing is set to be lower than or equal to the upper limit value, it is easy to avoid burning down of a resin or an organic fiber.

The pressure for pressurizing is 5 to 15 MPa.

In a case where the pressure for heating and pressurizing is set to be higher than or equal to the lower limit value, it is possible to easily make the surface of a resin-added carbon fiber sheet smooth. As a result, it is easy to make the surface of an obtained carbon fiber paper smoother. In a case where the pressure for heating and pressurizing is set to be lower than or equal to the upper limit value, it is possible to easily impart appropriate denseness to an obtained porous base material without destruction of carbon fibers contained in a resin-added carbon fiber sheet during heating and pressurizing.

The time for heating and pressurizing a resin-added carbon fiber sheet can be set to 1 minute to 1 hour.

Any technique that enables the heating and pressurizing to be performed evenly using a pair of heating and pressurizing media for interposing a resin-added carbon fiber sheet is applicable as a heating and pressurizing method. Examples thereof include a method in which smooth rigid plates are brought into contact with both surfaces of a resin-added carbon fiber sheet to perform heat pressing, and a method for using a heat roll press device or a continuous belt press device.

In a case of heating and pressurizing continuously manufactured resin-added carbon fiber sheets, the method for using a heat roll press device or a continuous belt press device is preferable. Alternately, a method for combining intermittent conveyance of resin-added carbon fiber sheets and intermittent heat pressing using smooth rigid plates may be used.

It is possible to continuously perform Step 4 by employing these methods.

When a resin-added carbon fiber sheet is heated and pressurized by being interposed between two rigid plates or using a heat roll press device or a continuous belt press device, a release agent may be applied to a belt in advance so that fibrous substances and the like are not attached to the belt, or a release paper may be interposed between the resin-added carbon fiber sheet and the rigid plates, a heat roll, or the belt. In the case of interposing a release paper, a clearance of a pair of heating and pressurizing media is set in consideration of the thickness of the release paper.

[Step 4 (Step of Manufacturing Porous Base Material)]

Step 4 is a step of manufacturing a porous base material by subjecting the carbon fiber paper manufactured in Step 3 to a carbonization treatment.

By subjecting carbon fiber paper to a carbonization treatment, a resin contained in the carbon fiber paper is also subjected to the carbonization treatment. For example, a resin or an organic fiber (including a carbon fiber precursor fiber or a fibril-like fiber) becomes resin carbide or fibrous carbide (including carbide of a carbon fiber precursor fiber or carbide of a fibril-like fiber), that is, a carbon binder (D), by being subjected to a carbonization treatment.

The carbonization treatment of carbon fiber paper is preferably performed within a temperature range of 1,000°C to 2,400°C in an inert atmosphere from the viewpoint of imparting sufficient conductivity to a porous base material to be obtained.

At this time, it is possible to perform a pre-carbonization treatment within a temperature range of 300°C to 1,000°C in an inert atmosphere before performing the carbonization treatment. By performing the pre-carbonization treatment, it is possible to easily discharge decomposition gas containing a large amount of sodium generated at an initial stage of carbonization. Therefore, it is possible to suppress attachment or deposition of various a decomposition products to/on the inner wall of a carbonization furnace or occurrence of corrosion or generation of black stains due to the decomposition products.

The time for the carbonization treatment of carbon fiber paper can be set, for example, to 1 minute to 1 hour.

The time for the pre-carbonization treatment of carbon fiber paper can be set, for example, to 1 minute to 1 hour.

In a case where carbon fiber paper sheets manufactured continuously are subjected to a carbonization treatment, it is preferable to continuously perform a heat treatment over the whole length of each of the carbon fiber paper sheets from the viewpoint of production cost. In a case where the porous base material is long, the productivity thereof increases and production of a membrane-electrode assembly (MEA) thereafter can also be continuously performed. Therefore, this contributes to reduction in production cost of an electrode.

In addition, it is preferable that an obtained porous base material be continuously wound into a roll shape. By making the porous base material into a roll shape, transportation becomes easy. This contributes to space saving in warehouses and manufacturing facilities, and not only productivity but also convenience is improved.

<Porous Electrode>

The porous electrode of the present invention includes a coating layer containing a carbon powder and a water repellent on at least one surface of the porous base material of the present invention.

[Coating Layer]

In order to use a sheet-like porous base material as an electrode, in general, a water repellent treatment is performed on the porous base material or coating layers which are called micro-porous layers (MPLs) and are made of a water repellent and a carbon powder are further stacked thereon.

A coating layer (MPL) made of a water repellent and carbon powder is obtained by bonding a carbon powder using a water repellent as a binder. In other words, a carbon powder is incorporated into a network formed by a water repellent to provide a fine net structure.

The thickness of a coating layer is preferably 5 to 50 $\mu$m.

When forming a coating layer, a part of a composition for forming the coating layer infiltrates into the porous base material. Therefore, it is difficult to define a clear boundary between the coating layer and the porous base material. However, in the present invention, a portion in which the composition for forming the coating layer does not infiltrate into the porous base material, that is, a layer made of only a water repellent and a carbon powder, is defined as a coating layer.

(Water Repellent)

Examples of the water repellent used in the coating layer include a fluorine resin and a silicone resin (silicone) which are chemically stable and have high water repellency. However, silicone has low acid resistance and cannot be brought into contact with a polymer electrolyte membrane having strong acidity. Therefore, only a fluorine resin is used.

The fluorine resin is not particularly limited, but examples thereof include a homopolymer or a copolymer of a fluorine monomer such as tetrafluoroethylene (TFE), hexafluoropropylene (HFP), vinylidene fluoride (VDF), chlorotrifluoroethylene (CTFE), vinyl fluoride (VF), a perfluoroalkyl vinyl ether (PAVE), perfluoro(allyl vinyl ether), perfluoro(butenyl vinyl ether) (PBVE), and perfluoro-(2,2-dimethyl-1,3-dioxole) (PDD). In addition, it is also possible to use an ethylene-tetrafluoroethylene copolymer (ETFE), an ethylene-chlorotrifluoroethylene copolymer (ECTFE), and the like which are copolymers of these with olefins represented by ethylene.

A fluorine resin in a state in which the fluorine resin is dissolved in a solvent or a fluorine resin in a granular form in a state in which the fluorine resin is dispersed in water, an alcohol, or the like is preferable as a form of these fluorine resins from the viewpoint of additivity.

Polytetrafluoro ethylene (PTFE), a tetrafluoroethylene-hexafluoropropylene copolymer (FEP), tetrafluoroethylene-perfluoroalkyl vinyl ether (PFA), and polyvinylidene fluoride (PVDF) are commercially available products that are easily obtained in solution, dispersion, or granular forms. These are preferably used from the viewpoints of handling properties and production cost.

It is preferable to use a water repellent in a proportion such that the concentration when the water repellent is dispersed in a solvent becomes 5 to 60 mass% with respect to the total mass of the dispersion.

It is possible to use water or an organic solvent as a solvent in which a water repellent is to be dispersed. It is preferable to use water from the viewpoints of risk, cost, and an environmental load of an organic solvent. When using an organic solvent, it is preferable to use a lower alcohol or acetone which is a solvent that can be mixed with water. It is preferable to use these organic solvents in a proportion of 0.5 to 2 with respect to 1 of water.

(Carbon Powder)

Examples of a carbon powder used in a coating layer include the same carbon powder described above contained in the porous base material of the present invention.

It is preferable to use a carbon powder in a proportion such that the concentration when the carbon powder is dispersed in a solvent becomes 5 to 30 mass% with respect to the total mass of the dispersion.

Examples of the solvent in which a carbon powder is to be dispersed and the proportion thereof include the same solvents described above in which a water repellent is to be dispersed and the corresponding proportions.

[Method for Manufacturing Porous Electrode]

The porous electrode of the present invention can be manufactured by stacking a coating layer containing a carbon powder and a water repellent on at least one surface of the porous base material of the present invention.

The stacking of a coating layer on a porous base material can be performed by employing a well-known method except that the porous base material of the present invention is used.

A water repellent treatment may be performed on the porous base material of the present invention before stacking a coating layer containing a carbon powder and a water repellent on the porous base material of the present invention.

• Water Repellent Treatment

Humidified fuel is supplied to an anode side of a fuel cell in order to maintain moderate proton conduction by suppressing drying of a polymer electrolyte membrane. Furthermore, water (vapor) as an electrode reaction product is generated on a cathode side. In some cases, the water condenses into liquid water which closes voids of the porous base material and interferes with gas permeation.

Accordingly, in a case where the porous electrode of the present invention is used as an electrode of a fuel cell, a water repellent treatment may be performed using a water repellent in order to secure gas permeability.

Examples of the water repellent used for the water repellent treatment of a porous base material include the same water repellent used in a coating layer. Specifically, a fluorine resin is used. The water repellent used for the water repellent treatment of a porous base material and the water repellent used in a coating layer may be the same types or different types of fluorine resins.

It is possible to use a dipping method for immersing a porous base material in a dispersion in which fine particles of a fluorine resin are dispersed, a spray method for spraying a dispersion in which fine particles of a fluorine resin are dispersed, and the like as the method for performing a water repellent treatment on a porous base material.

The concentration of the dispersion is not particularly limited. However, the solid content is preferably 1 to 30 weight%, more preferably 10 to 30 weight%, and particularly preferably 15 to 25 weight% in order to uniformly attach a fluorine resin without filling voids of a porous base material. The "solid content" is a "nonvolatile content" and refers to an evaporation residue remaining after heating a dispersion to volatilize water or other solvents.

In a case of using PTFE as a fluorine resin, it is preferable to sinter PTFE.

It is necessary that the sintering temperature is within a temperature range in which PTFE softens and is bound to carbon fibers or a carbon binder, but is not thermally decomposed. The temperature range is preferably 300°C to 390°C and more preferably 320°C to 360°C.

The fluorine-based resin is provided so as to coat a macroscopic conductive path in a porous base material, obtained by binding carbon fibers with a carbon binder, from the outside. That is, the fluorine resin exists on the surface of the conductive path without dividing the conductive path composed of carbon fibers and a carbon binder. However, most of the fluorine resin is aggregated in the vicinity of an intersection of fibers, and the surface of the carbon fibers or the carbon binder forming the porous base material is not coated with the fluorine resin without a gap. Accordingly, a continuous conductive path from the surface of the base material to the interior of the base material is secured even after a water repellent treatment, and therefore, it is possible to achieve both water repellency and conductivity.

The number of times a fluorine resin is added is not particularly limited, but is preferably small from the viewpoint of reducing production cost.

In a case where the number of additions is plural, the same dispersion in which fine particles of a fluorine resin to be added are dispersed may be used or a dispersion with a different concentration of a dispersion or different types of fluorine resins may be used.

In addition, the addition amount of a fluorine resin may be uniform in a thickness direction of a porous base material or there may be a concentration gradient.

[Examples]

Hereinafter, the present invention will be described in more detail using examples, but is not limited to these examples. Physical property values and the like in examples were measured through the following method.

(1) Thickness

The thickness of a porous base material was measured using a micrometer (manufactured by Mitutoyo Corporation). The size of a probe was set to a diameter of 6.35 mm and the measuring pressure was set to 1.5 kPa.

(2) Bulk Density

The bulk density of a porous base material was calculated from the basis weight of the porous base material and the thickness of the porous base material measured using a micrometer according to the following equation.

$$\text{Bulk density (g/cm}^3) = \text{basis weight (g/m}^2) \,/\, \text{thickness (}\mu\text{m)}$$

(3) Gas Permeation Coefficient in Thickness Direction

The gas permeation coefficient of a porous base material in a thickness direction was obtained through a method in accordance with JIS-P8117. A porous base material was interposed between cells having holes with a diameter of 3 mm, 200 mL of air was allowed to flow from the holes at a pressure of 1.29 kPa, the time required for the air to permeate therethrough was measured using a Gurley-type densometer, and the permeation coefficient was calculated according to the following equation.

Permeation coefficient (mL·mm/cm²/hr/Pa) = gas permeation amount (mL) / permeation time (hr) / permeation hole area (cm²) / permeation pressure (Pa) × sample thickness (mm)

(4) Penetration Direction Resistance

The electric resistance (penetration direction resistance) of a porous base material in a thickness direction was obtained according to the following equation by measuring a resistance value when a current was allowed to flow at a current density of 10 mA/cm$^2$ by interposing the porous base material between gold-plated copper plates and pressurizing the copper plates at 1.0 MPa from above and below the copper plates.

Penetration direction resistance (m$\Omega\cdot$cm$^2$) = measured resistance value (m$\Omega$) $\times$ sample area (cm$^2$)

(5) Deflection in Bending and Breaking

The deflection in bending and breaking of a porous base material was obtained by obtaining a displacement amount until a test piece with a width of 10 mm broke in a three-point bending test with a distance between supporting points of 20 mm using a universal tester (manufactured by IMADA-SS Corporation). The deflection in bending and breaking in an MD direction, that is, a flow direction at the time of continuous paper-making was measured.

(6) Bending Modulus of Elasticity

The bending modulus of elasticity was obtained from a bending stress obtained simultaneously with the deflection in bending and breaking in the three-point bending test. The bending modulus of elasticity in an MD direction, that is, a flow direction at the time of continuous paper-making, was also measured.

(7) Curvature Radius

In a case where the deflection in bending and breaking obtained in the three-point bending test is set to K (mm), the curvature radius R is obtained according to the following equation. Curvature radius R (mm) = (K$^2$ + 1) / 2K

(8) Short-Circuit Current

A porous base material was placed on one surface of a perfluorosulfonic acid-based polymer electrolyte membrane (manufactured by Chemours, trade name: NAFION (registered trademark) NR-211, film thickness: 25 $\mu$m) so as to come into contact with the one surface thereof. This was interposed between graphite plates which were then further interposed between gold-plated copper plate electrodes and pressurized up to 3.5 MPa. Thereafter, the short-circuit current due to damage to the polymer electrolyte membrane was measured using a digital multimeter (manufactured by ADC CORPORATION, trade name: 7352E). This was performed at a potential difference between the electrodes of 0.3 V at this time.

Example 1

PAN-based carbon fibers (A) (manufactured by Mitsubishi Chemical Corporation, average fiber diameter: 13 $\mu$m) cut to an average fiber length of 6 mm and polyvinyl alcohol (PVA) fibers (manufactured by Kuraray Co., Ltd., trade name: VPB105-1, average fiber length of 3 mm) were prepared.

Carbon fibers (A) and PVA fibers were put into a slurry tank of a wet-type short-web continuous paper-making device at a ratio of 4:1 and water was added thereto to disperse and open the fibers uniformly. When the fibers were sufficiently dispersed, a web was sent to be passed through a short-web plate. The resultant was dried with a dryer to obtain a carbon fiber sheet in a roll form with a width of 1,000 mm and a basis weight of 40 g/m$^2$.

Next, the obtained carbon fiber sheet was immersed in a methanol solution of a phenolic resin (manufactured by DIC CORPORATION, trade name: PHENOLITE J-325), and a resin-added carbon fiber sheet obtained by attaching 125 parts by mass of phenolic resin solid contents to 125 parts by mass of the carbon fiber sheet (100 parts by mass of the carbon fibers (A)) was obtained.

The obtained resin-added carbon fiber sheet was slit to a width of 850 mm and was continuously heated and pressurized using a continuous type hot press device (double belt press device: DBP) including a pair of endless belts which are disclosed, for example, in Japanese Patent No. 3699447. At this time, the resin-added carbon fiber sheet was passed through DBP by being interposed between two sheets of release paper so as to be prevented from sticking to the belt. The preheating roll temperature of DBP was set to 235°C and the press roll temperature was 260°C. As a result, carbon fiber paper with a width of 850 mm and a length of 100 m was obtained.

A porous base material having physical properties shown in Table 1 was obtained by performing a carbonization treatment of the obtained carbon fiber paper at a maximum temperature of 2,200°C.

It is possible to wind the porous base material manufactured in Example 1 on a 6-inch paper tube without cracking or breakage. In addition, the short-circuit current was 0.0 mA/cm$^2$.

Example 2

A porous base material having physical properties shown in Table 1 was obtained in the same manner as in Example 1 except that 75 parts by mass of the PAN-based carbon fibers (A) (manufactured by Mitsubishi Chemical Corporation, average fiber diameter: 13 $\mu$m) cut to an average fiber length of 6 mm and 25 parts by mass of PAN-based carbon fibers (B) (manufactured by Mitsubishi Chemical Corporation, trade name: TR50S, average fiber diameter: 7 $\mu$m) cut to an average fiber length of 6 mm were used as carbon fibers.

Example 3

A porous base material having physical properties shown in Table 1 was obtained in the same manner as in Example 1 except that 50 parts by mass of the PAN-based carbon fibers (A) (manufactured by Mitsubishi Chemical Corporation, average fiber diameter: 13 $\mu$m) cut to an average fiber length of 6 mm and 50 parts by mass of the PAN-based carbon fibers (B) (manufactured by Mitsubishi Chemical Corporation, trade name: TR50S, average fiber diameter: 7 $\mu$m) cut to an average fiber length of 6 mm were used as carbon fibers.

Example 4

PAN-based carbon fibers (A) (manufactured by Mitsubishi Chemical Corporation, average fiber diameter: 13 $\mu$m) cut to an average fiber length of 6 mm, PAN-based carbon fibers (B) (manufactured by Mitsubishi Chemical Corporation, trade name: TR50S, average fiber diameter: 7 $\mu$m) cut to an average fiber length of 6 mm, polyethylene pulp (manufactured by Mitsui Chemicals, Inc., trade name: SWP), and polyvinyl alcohol (PVA) fibers (manufactured by Kuraray Co., Ltd., trade name: VPB105-1, average fiber length of 3 mm) were prepared.
A porous base material having physical properties shown in Table 1 was obtained in the same manner as in Example 1 except that the carbon fibers (A), the carbon fibers (B), polyethylene pulp, and PVA fibers were put into a slurry tank of a wet-type short-web continuous paper-making device at a ratio of 15:5:4:4.

Example 5

A carbon fiber sheet was obtained in the same manner as in Example 4.
Subsequently, a methanol solution of a phenolic resin (manufactured by DIC CORPORATION, trade name: PHENOLITE J-325) and pyrolytic graphite (manufactured by Ito Graphite Co., Ltd., trade name: PC-H) were used and the phenolic resin solid contents and the pyrolytic graphite were mixed with each other at a ratio of 6:1. A porous base material having physical properties shown in Table 1 was obtained in the same manner as in Example 4 except for the above.

Example 6

PAN-based carbon fibers (A) (manufactured by Mitsubishi Chemical Corporation, average fiber diameter: 13 $\mu$m) cut to an average fiber length of 6 mm, PAN-based carbon fibers (B) (manufactured by Mitsubishi Chemical Corporation, trade name: TR50S, average fiber diameter: 7 $\mu$m) cut to an average fiber length of 6 mm, acrylic fibers (manufactured by Mitsubishi Chemical Corporation, trade name: H100) having an average fiber diameter of 4 $\mu$m and an average fiber length of 3 mm, readily splittable acrylic sea-island composite short fibers (manufactured by Mitsubishi Chemical Corporation, trade name: VONNEL MVP-C300, average fiber length: 3 mm) made of an acrylonitrile polymer and a methacrylate polymer which had been subjected to a beating treatment were prepared, and a porous base material was obtained according to the following procedures (1) to (7).

(1) [Disintegration of Carbon Fiber]

50 parts by mass of PAN-based carbon fibers (A) and 50 parts by mass of PAN-based carbon fibers (B) were dispersed in water so that the fiber concentration became 1% (10 g/L), and the dispersed fibers were subjected to a disintegration treatment while being passed through a disk refiner (manufactured by KUMAGAI RIKI KOGYO Co., Ltd.) to prepare disintegrated slurry fibers (SA).

(2) Disintegration of Carbon Fiber Precursor Fiber

Acrylic fibers (manufactured by Mitsubishi Chemical Corporation, trade name: H100) having an average fiber diameter of 4 μm and an average fiber length of 3 mm were dispersed in water as carbon fiber precursor fibers so that the fiber concentration became 1% (10 g/L) to prepare disintegrated slurry fibers (Sb1).

(3) Disintegration of Fibril-Like Fiber

Readily splittable acrylic sea-island composite short fibers (manufactured by Mitsubishi Chemical Corporation, trade name: VONNEL MVP-C300, average fiber length: 3 mm) made of an acrylonitrile polymer and a methacrylate polymer as fibril-like fibers were subjected to a beating treatment, and the beaten fibers were dispersed in water so that the fiber concentration became 1% (10 g/L) to prepare disintegrated slurry fibers (Sb2).

(4) Preparation of Slurry for Paper-Making

Disintegrated slurry fibers (SA), disintegrated slurry fibers (Sb1), disintegrated slurry fibers (Sb2), and dilution water were weighed so that the mass ratio of carbon fibers (A), carbon fibers (B), carbon fiber precursor fibers, and fibril-like fibers became 3:1:1:1 and the concentration of the fibers (hereinafter, abbreviated as flock) in a slurry became 1.7 g/L, and were put into a slurry supply tank.

Polyacrylamide was further added thereto to prepare a slurry for paper-making with a viscosity of 22 centipoises.

(5) Manufacture of Carbon Fiber Sheet and Three-Dimensional Interlacing Treatment through Pressurized Water Flow Injection

The above-described slurry for paper-making was supplied onto a net of a treatment device to be described below using a metering pump. The slurry for paper-making was supplied and widened to a predetermined size through a flow box used for rectifying the slurry for paper-making to a uniform flow. Thereafter, the slurry for paper-making was allowed to stand, passed through a portion for natural dehydration, and completely dehydrated using a vacuum dehydration device, and a wet paper web with a target basis weight of 60 g/m$^2$ was stacked on the net.

At the same time as completion of this treatment, an interlacing treatment was added to the process by passing the resultant through pressurized water flow injection pressures in order of pressures 1 MPa (nozzle 1), 2 MPa (nozzle 2), and 2 MPa (nozzle 3) using water jet nozzles behind the tester.

The carbon fiber sheet subjected to the interlacing treatment was dried using a pin tenter tester (manufactured by TSUJII DYEING MACHINE MANUFACTURING CO., LTD., trade name: PT-2A-400) at 150°C × 3 minutes to obtain a carbon fiber sheet having a three-dimensional interlaced structure with a basis weight of 60 g/m$^2$.

(6) Addition of Resin and Drying Treatment

A phenolic resin (manufactured by DIC CORPORATION, trade name: GG-1402) was dissolved in pure water so that the resin solid content became 10 mass% of an aqueous resin solution to prepare an aqueous phenolic resin solution. Pyrolytic graphite (manufactured by Ito Graphite Co., Ltd., trade name: PC-H) was further added as a carbon powder so that the carbon powder / resin solid content ratio became 0.4 to prepare a dispersion.

This dispersion flowed down from one surface or both surfaces over the carbon fiber sheet with a three-dimensional interlaced structure which had been obtained in (5) and excess resin and carbon powder were removed through nipping. Thereafter, water in the sheet was sufficiently dried at 80°C to obtain a resin-added carbon fiber sheet obtained by attaching 125 parts by mass of a total of the phenolic resin solid contents and the carbon powder to 150 parts by mass of the carbon fiber sheet (among these, carbon fibers (A) are 75 parts by mass and carbon fibers (B) are 25 parts by mass) with a total of nonvolatile resin contents and the carbon powder.

(7) Heating and Pressurizing Treatment and Carbonization Treatment

After that, a porous base material having physical properties shown in Table 1 was obtained through a heating and pressurizing treatment and a carbonization treatment in the same manner as in Example 1.

(Treatment Device)

The treatment device included a carbon fiber sheet conveying device consisting of a net driving portion and a net in which a plain weave mesh formed of a plastic net with a width of 60 cm and a length of 585 cm was continuously rotated, a device for supplying a slurry for paper-making having a width of a slurry supply portion of 48 cm and a supply amount of slurry of 30 L/min, a vacuum dehydration device disposed on the lower portion of the net, and a pressurized water flow injection treatment device which will be shown below.

Comparative Example 1

A porous base material having physical properties shown in Table 1 was obtained in the same manner as in Example 1 except that only PAN-based carbon fibers (B) (manufactured by Mitsubishi Chemical Corporation, trade name: TR50S, average fiber diameter: 7 $\mu$m) cut to an average fiber length of 6 mm were used as carbon fibers.
The porous base material of Comparative Example 1 had a lower gas permeation coefficient and lower bending strength than the porous base material of the examples.

Comparative Example 2

A porous base material having physical properties shown in Table 1 was obtained in the same manner as in Example 1 except that 20 parts by mass of the PAN-based carbon fibers (B) (manufactured by Mitsubishi Chemical Corporation, trade name: TR50S, average fiber diameter: 7 $\mu$m) cut to an average fiber length of 6 mm and 80 parts by mass of pitch-based carbon fibers (C) (manufactured by Mitsubishi Chemical Corporation, trade name: K23AQG) cut to an average fiber length of 3 mm were used as carbon fibers.
The porous base material of Comparative Example 2 had remarkably lower bending strength than the porous base material of the examples. Therefore, in a case where the porous base material was tried to be wound on a 6-inch paper tube, it cracked or broke. In addition, the short-circuit current was high at 12.8 mA/cm$^2$, which suggested that there was a fine powder due to crushing of fibers.

Example 7

A carbon fiber sheet was obtained in the same manner as in Example 1.
Subsequently, a solution of a phenolic resin (manufactured by DIC CORPORATION, trade name: PHENOLITE GG-1402) and acetylene black (manufactured by Denka Company Limited, trade name: DENKA BLACK granular product) were used and the phenolic resin solid contents and the acetylene black were mixed with each other at a ratio of 10:1. A resin-added carbon fiber sheet obtained by attaching 125 parts by mass of a total of the phenolic resin solid contents and the carbon powder to 125 parts by mass of the carbon fiber sheet was obtained.
A porous base material having physical properties shown in Table 1 was obtained in the same manner as in Example 1 except for the above.

Example 8

A carbon fiber sheet was obtained in the same manner as in Example 2.
Subsequently, a methanol solution of a phenolic resin (manufactured by DIC CORPORATION, trade name: PHENOLITE J-325) and spherical graphite (manufactured by Ito Graphite Co., Ltd., trade name: SG-BH8) were used and the phenolic resin solid contents and the spherical graphite were mixed with each other at a ratio of 5:1.
A porous base material having physical properties shown in Table 1 was obtained in the same manner as in Example 2 except for the above.

Example 9

A carbon fiber sheet was obtained in the same manner as in Example 2.
Next, a methanol solution of a phenolic resin (manufactured by DIC CORPORATION, trade name: PHENOLITE J-325) was prepared, and pitch-based carbon fibers (C) (manufactured by Mitsubishi Chemical Corporation, trade name: K23AQG) were pulverized with a ball mill. The phenolic resin solid contents and the pulverized pitch-based carbon fibers (C) were mixed with each other at a ratio of 10:1.
A porous base material having physical properties shown in Table 1 was obtained in the same manner as in Example 2 except for the above.

Example 10

A water repellent treatment of a porous base material and stacking of a coating layer were performed through the following procedure.

A PTFE dispersion (manufactured by Chempurs-Mitsui Fluoroproducts Co., Ltd., trade name: 31-JR), a surfactant (polyoxyethylene (10) octylphenyl ether), and distilled water were prepared, and a water repellent treatment liquid was prepared so that the concentration of PTFE became 1 weight% and the concentration of the surfactant became 2 weight%.

Subsequently, the porous base material obtained in Example 1 was immersed in the water repellent treatment liquid, and an excess water repellent treatment liquid was removed using an applicator (manufactured by TESTER SANGYO CO,. LTD.). The treatment was performed for 20 minutes using a muffle furnace of which the temperature was set to 380°C to obtain a porous base material subjected to the water repellent treatment.

Next, acetylene black (manufactured by Denka Company Limited, trade name: DENKA BLACK (registered trademark) powdery product), ion-exchanged water, and isopropyl alcohol were prepared and mixed with each other at a weight ratio of 5:100:80. The mixture was stirred for 30 minutes at 15,000 rpm using HOMOMIXER MARK-II (manufactured by PRIMIX Corporation) while being cooled.

The liquid temperature of the carbon dispersion was kept at 30°C, a PTFE dispersion (manufactured by Chempurs-Mitsui Fluoroproducts Co., Ltd., trade name: 31-JR) was added thereto so that the PTFE solid content / acetylene black weight ratio became 0.4, and the mixture was stirred for 15 minutes at 5,000 rpm using a disperser to obtain an ink for a coating layer.

Subsequently, one surface of the porous base material subjected to the water repellent treatment was coated with an ink for a coating layer using an applicator (manufactured by TESTER SANGYO CO., LTD.), and the coated ink was dried for 20 minutes using an IR heater of which the temperature was set to 180°C. The treatment was further performed using a muffle furnace at 380°C for 20 minutes to obtain a porous electrode having a coating layer.

The basis weight of the obtained porous carbon electrode was 63 g/m² and the thickness thereof was 155 μm.

[Table 1]

| | | | Examples | | | | | | | | | Comparative Examples | |
| | | | 1 | 2 | 3 | 4 | 5 | 6 | 7 | 8 | 9 | 1 | 2 |
|---|---|---|---|---|---|---|---|---|---|---|---|---|---|
| Raw materials | Carbon fiber (A) | Parts by mass | 100 | 75 | 50 | 75 | 75 | 75 | 100 | 75 | 75 | 0 | 0 |
| | Carbon fiber (B) | Parts by mass | 0 | 25 | 50 | 25 | 25 | 25 | 0 | 25 | 25 | 100 | 20 |
| | Carbon fiber (C) | Parts by mass | 0 | 0 | 0 | 0 | 0 | 0 | 0 | 0 | 0 | 0 | 80 |
| | Fibril-like fiber / carbon fiber precursor fiber | Parts by mass | 0 | 0 | 0 | 20 | 20 | 50 | 0 | 0 | 0 | 0 | 0 |
| | Binder of carbon fiber sheet | Parts by mass | 25 | 25 | 25 | 20 | 20 | 0 | 25 | 25 | 25 | 25 | 25 |
| | Resin solid content | Parts by mass | 125 | 125 | 125 | 125 | 125 | 89 | 114 | 125 | 114 | 125 | 125 |
| | Carbon powder | Parts by mass | 0 | 0 | 0 | 0 | 21 | 36 | 11 | 25 | 11 | 0 | 0 |
| | Type of carbon powder | | | | | | CP1 | CP1 | CP2 | CP3 | CP4 | | |
| Porous base material | Thickness | μm | 137 | 144 | 140 | 200 | 190 | 147 | 150 | 139 | 145 | 152 | 145 |
| | Basis weight | g/m² | 44 | 50 | 47 | 61 | 59 | 52 | 50 | 57 | 51 | 40 | 57 |
| | Bulk density | g/cm³ | 0.32 | 0.35 | 0.34 | 0.30 | 0.31 | 0.35 | 0.33 | 0.41 | 0.35 | 0.26 | 0.39 |
| | Gas permeation coefficient in thickness direction | mL·mm/cm²/hr/Pa | 411 | 288 | 238 | 220 | 308 | 244 | 392 | 279 | 295 | 167 | 290 |
| | Penetration direction resistance | mΩ·cm² | 7.8 | 5.9 | 5.4 | 6.9 | 5.2 | 5.3 | 7.2 | 5.0 | 6.3 | 6.5 | 4.0 |
| | Deflection in bending and breaking | mm | 3.0 | 2.6 | 2.1 | 2.2 | 2.5 | 2.1 | 2.9 | 2.2 | 2.0 | 2.7 | 0.8 |
| | Bending modulus of elasticity | GPa | 7.1 | 6.7 | 6.2 | 9.7 | 3.4 | 6.4 | 6.9 | 6.6 | 4.5 | 5.5 | 1.4 |

In the column of the type of carbon powder in Table 1, CP1 indicates that pyrolytic graphite was used, CP2 indicates that acetylene black was used, CP3 indicates that spherical graphite was used, and CP4 indicates that pitch-based carbon powder was used.

Industrial Applicability

According to the present invention, it is possible to provide a porous base material having high gas permeability and a high drainage property, high mechanical strength, and excellent diffusibility of an electrolyte.

In addition, it is possible to provide a porous electrode using the porous base material.

Furthermore, it is possible to provide carbon fiber paper which can be a raw material for the porous base material.

**Claims**

1. A porous base material containing:

   a carbon fiber (A) having an average fiber diameter of 10 to 20 $\mu$m, an average fiber length of 2 to 30 mm, a tensile modulus of elasticity of 200 to 600 GPa, and a tensile strength of 3,000 to 7,000 MPa, wherein the carbon fiber (A) is a PAN-based carbon fiber; and
   a carbon binder (D) containing resin carbide, wherein the resin carbide is formed by subjecting a resin to a carbonization treatment, wherein the resin is a thermosetting resin including a phenolic resin,
   wherein the carbon fiber (A) is bound with the carbon binder (D),
   wherein, with respect to 100 mass % of the porous base material, the content of the carbon fiber (A) is 40 to 80 mass % and the content of the carbon binder (D) is 20 to 60 mass %.

2. The porous base material according to claim 1, further containing:

   a carbon fiber (B) having an average fiber diameter of 3 to 9 $\mu$m, an average fiber length of 2 to 30 mm, a tensile modulus of elasticity of 200 to 600 GPa, and a tensile strength of 3,000 to 7,000 MPa, wherein the carbon fiber (B) is a PAN-based carbon fiber,
   wherein the total content of the carbon fiber (A) and the carbon fiber (B) is 40 to 80 mass % with respect to 100 mass % of the porous base material, wherein a mass of the carbon fiber (B) contained in the porous base material is less than or equal to a mass of the carbon fiber (A) contained in the porous base material.

3. The porous base material according to claim 1 or 2,
   wherein a bulk density is 0.20 to 0.45 g/cm$^3$, a bending modulus of elasticity is 3.0 to 15.0 GPa, and a gas permeation coefficient in a thickness direction is 200 to 600 mL·mm/cm$^2$/hr/Pa.

4. The porous base material according to any one of claims 1 to 3,
   wherein the carbon binder (D) further contains fibrous carbide.

5. The porous base material according to any one of claims 1 to 4, further containing a carbon powder.

6. A porous electrode comprising:
   a coating layer containing a carbon powder and a water repellent on at least one surface of the porous base material according to any one of claims 1 to 5.

7. Carbon fiber paper containing:

   a carbon fiber (A) having an average fiber diameter of 10 to 20 $\mu$m, an average fiber length of 2 to 30 mm, a tensile modulus of elasticity of 200 to 600 GPa, and a tensile strength of 3,000 to 7,000 MPa, wherein the carbon fiber (A) is a PAN-based carbon fiber; and
   a thermosetting resin including a phenolic resin,
   wherein the carbon fiber (A) is bound with the resin,
   wherein the content of the carbon fiber (A) is 20 to 60 mass % with respect to 100 mass % of the carbon fiber paper.

8. The carbon fiber paper according to claim 7, further containing:

   a carbon fiber (B) having an average fiber diameter of 3 to 9 $\mu$m, an average fiber length of 2 to 30 mm, a tensile modulus of elasticity of 200 to 600 GPa, and a tensile strength of 3,000 to 7,000 MPa, wherein the carbon fiber (B) is a PAN-based carbon fiber,
   wherein the total content of the carbon fiber (A) and the carbon fiber (B) is 20 to 60 mass % with respect to 100 mass % of the carbon fiber paper,
   wherein a mass of the carbon fiber (B) contained in the carbon fiber paper is less than or equal to a mass of the carbon fiber (A) contained in the carbon fiber paper.

9. The carbon fiber paper according to claim 7 or 8, further containing a carbon powder.

10. A method for manufacturing carbon fiber paper, comprising:

paper-making a dispersion obtained by dispersing a carbon fiber in a dispersion medium to manufacture a carbon fiber sheet;

adding a resin to the carbon fiber sheet to manufacture a resin-added carbon fiber sheet, wherein the resin is a thermosetting resin including a phenolic resin; and

heating and pressurizing the resin-added carbon fiber sheet, wherein the temperature for heating is 180 to 360 °C and the pressure for pressurizing is 5 to 15 MPa,

wherein the carbon fiber includes a carbon fiber (A) having an average fiber diameter of 10 to 20 $\mu$m, an average fiber length of 2 to 30 mm, a tensile modulus of elasticity of 200 to 600 GPa, and a tensile strength of 3,000 to 7,000 MPa, wherein the carbon fiber (A) is a PAN-based carbon fiber,

wherein the content of the carbon fiber (A) is 20 to 60 mass % with respect to 100 mass % of the carbon fiber paper.

11. The method for manufacturing carbon fiber paper according to claim 10,
wherein the carbon fiber (A) is mixed with a carbon fiber (B) having an average fiber diameter of 3 to 9 $\mu$m, an average fiber length of 2 to 30 mm, a tensile modulus of elasticity of 200 to 600 GPa, and a tensile strength of 3,000 to 7,000 MPa, to make a carbon fiber mixture which is used as the carbon fiber, wherein the carbon fiber (B) is a PAN-based carbon fiber, and

wherein the total content of the carbon fiber (A) and the carbon fiber (B) is 20 to 60 mass % with respect to 100 mass % of the carbon fiber paper, wherein a mass of the carbon fiber (B) in the carbon fiber mixture is less than or equal to a mass of the carbon fiber (A) in the carbon fiber mixture.

12. A method for manufacturing a porous base material, comprising:
subjecting the carbon fiber paper manufactured by the method for manufacturing carbon fiber paper according to claim 10 or 11 to a carbonization treatment.

## Patentansprüche

1. Poröses Trägermaterial enthaltend:

eine Kohlenstofffaser (A) mit einem durchschnittlichen Faserdurchmesser von 10 bis 20 $\mu$m, einer durchschnittlichen Faserlänge von 2 bis 30 mm, einem Zugelastizitätsmodul von 200 bis 600 GPa und einer Zugfestigkeit von 3.000 bis 7.000 MPa, wobei die Kohlenstofffaser (A) eine PAN-basierte Kohlenstofffaser ist; und

ein Kohlenstoffbindemittel (D), das Harzkarbid enthält, wobei das Harzkarbid gebildet wird, indem ein Harz einer Karbonisationsbehandlung unterworfen wird, wobei das Harz ein wärmehärtbares Harz ist, das ein Phenolharz enthält,

wobei die Kohlenstofffaser (A) mit dem Kohlenstoffbindemittel (D) gebunden ist,

wobei, bezogen auf 100 Masse-% des porösen Trägermaterials, der Gehalt der Kohlenstofffaser (A) 40 bis 80 Masse-% beträgt und der Gehalt des Kohlenstoffbinders (D) 20 bis 60 Masse-% beträgt.

2. Poröses Trägermaterial gemäß Anspruch 1, ferner enthaltend:

eine Kohlenstofffaser (B) mit einem durchschnittlichen Faserdurchmesser von 3 bis 9 $\mu$m, einer durchschnittlichen Faserlänge von 2 bis 30 mm, einem Zugelastizitätsmodul von 200 bis 600 GPa und einer Zugfestigkeit von 3.000 bis 7.000 MPa, wobei die Kohlenstofffaser (B) eine PAN-basierte Kohlenstofffaser ist; und

wobei der Gesamtgehalt der Kohlenstofffaser (A) und der Kohlenstofffaser (B) 40 bis 80 Masse-% bezogen auf 100 Masse-% des porösen Trägermaterials beträgt, wobei eine Masse der Kohlenstofffaser (B), enthalten in dem porösen Trägermaterial, niedriger als oder gleich einer Masse der Kohlenstofffaser (A), enthalten in dem porösen Trägermaterial, ist.

3. Poröses Trägermaterial gemäß Anspruch 1 oder 2,
wobei eine Raumdichte 0,20 bis 0,45 g/cm$^3$ beträgt, ein Elastizitäts-Biegemodul 3,0 bis 15,0 GPa beträgt, und ein Gaspermeationskoeffizient in Richtung der Dicke 200 bis 600 mL·mm/cm$^2$/h/Pa beträgt.

4. Poröses Trägermaterial gemäß einem der Ansprüche 1 bis 3, wobei das Kohlenstoffbindemittel (D) ferner ein faserförmiges Karbid enthält.

5. Poröses Trägermaterial gemäß einem der Ansprüche 1 bis 4, ferner enthaltend ein Kohlenstoffpulver.

6. Poröse Elektrode umfassend:
   eine Beschichtung enthaltend ein Kohlenstoffpulver und ein wasserabweisendes Mittel auf mindestens einer Oberfläche des porösen Trägermaterials gemäß einem der Ansprüche 1 bis 5.

7. Kohlenstofffaserpapier enthaltend:

   eine Kohlenstofffaser (A) mit einem durchschnittlichen Faserdurchmesser von 10 bis 20 $\mu$m, einer durchschnittlichen Faserlänge von 2 bis 30 mm, einem Zugelastizitätsmodul von 200 bis 600 GPa und einer Zugfestigkeit von 3.000 bis 7.000 MPa, wobei die Kohlenstofffaser (A) eine PAN-basierte Kohlenstofffaser ist; und
   ein wärmehärtbares Harz, enthaltend ein Phenolharz,
   wobei die Kohlenstofffaser (A) mit dem Harz gebunden ist,
   wobei der Gehalt der Kohlenstofffaser (A) 20 bis 60 Masse-% bezogen auf 100 Masse-% des Kohlenstoffpapiers beträgt.

8. Kohlenstofffaserpapier gemäß Anspruch 7, ferner enthaltend:

   eine Kohlenstofffaser (B) mit einem durchschnittlichen Faserdurchmesser von 3 bis 9 $\mu$m, einer durchschnittlichen Faserlänge von 2 bis 30 mm, einem Zugelastizitätsmodul von 200 bis 600 GPa und einer Zugfestigkeit von 3.000 bis 7.000 MPa, wobei die Kohlenstofffaser (B) eine PAN-basierte Kohlenstofffaser ist;
   wobei der Gesamtgehalt der Kohlenstofffaser (A) und der Kohlenstofffaser (B) 20 bis 60 Masse-% bezogen auf 100 Masse-% des Kohlenstofffaserpapiers beträgt,
   wobei eine Masse der Kohlenstofffaser (B), enthalten in dem Kohlenstofffaserpapier, niedriger als oder gleich einer Masse der Kohlenstofffaser (A), enthalten in dem Kohlenstofffaserpapier, ist.

9. Kohlenstofffaserpapier gemäß Anspruch 7 oder 8, ferner enthaltend ein Kohlenstoffpulver.

10. Verfahren zur Herstellung von Kohlenstofffaserpapier, umfassend:

    Papierherstellung aus einer Dispersion, erhalten durch Dispergieren einer Kohlenstofffaser in einem Dispersionsmedium, um eine Kohlenstofffaserfolie herzustellen;
    Hinzufügen eines Harzes zu der Kohlenstofffaserfolie, um eine mit Harz versetzte Kohlenstofffaserfolie herzustellen, wobei das Harz ein wärmehärtbares Harz, enthaltend ein Phenolharz, ist; und
    Erhitzen und Druckbeaufschlagung der mit Harz versetzten Kohlenstofffaserfolie, wobei die Heiztemperatur 180 bis 360°C beträgt und der Druck der Druckbeaufschlagung 5 bis 15 MPa beträgt,
    wobei die Kohlenstofffaser eine Kohlenstofffaser (A) mit einem durchschnittlichen Faserdurchmesser von 10 bis 20 $\mu$m, einer durchschnittlichen Faserlänge von 2 bis 30 mm, einem Zugelastizitätsmodul von 200 bis 600 GPa und einer Zugfestigkeit von 3.000 bis 7.000 MPa enthält, wobei die Kohlenstofffaser (A) eine PAN-basierte Kohlenstofffaser ist,
    wobei der Gehalt der Kohlenstofffaser (A) 20 bis 60 Masse-% bezogen auf 100 Masse-% des Kohlenstoffpapiers beträgt.

11. Verfahren zur Herstellung von Kohlenstofffaserpapier gemäß Anspruch 10,

    wobei die Kohlenstofffaser (A) mit einer Kohlenstofffaser (B) mit einem durchschnittlichen Faserdurchmesser von 3 bis 9 $\mu$m, einer durchschnittlichen Faserlänge von 2 bis 30 mm, einem Zugelastizitätsmodul von 200 bis 600 GPa und einer Zugfestigkeit von 3.000 bis 7.000 MPa gemischt wird, um eine Kohlstofffasermischung herzustellen, die als Kohlenstofffaser verwendet wird, wobei die Kohlenstofffaser (B) eine PAN-basierte Kohlenstofffaser ist, und
    wobei der Gesamtgehalt der Kohlenstofffaser (A) und der Kohlenstofffaser (B) 20 bis 60 Masse-% bezogen auf 100 Masse-% des Kohlenstofffaserpapiers beträgt, wobei eine Masse der Kohlenstofffaser (B) in der Kohlenstofffasermischung niedriger als oder gleich einer Masse der Kohlenstofffaser (A) in der Kohlenstofffasermischung ist.

12. Verfahren zur Herstellung eines porösen Trägermaterials, umfassend:
    das Unterwerfen des Kohlenstofffaserpapiers, hergestellt gemäß einem Verfahren zur Herstellung von Kohlenstofffaserpapier gemäß einem der Ansprüche 10 oder 11, der Karbonisationsbehandlung.

**Revendications**

1. Matériau de base poreux contenant :

   une fibre de carbone (A) présentant un diamètre de fibre moyen de 10 à 20 $\mu$m, une longueur de fibre moyenne de 2 à 30 mm, un module d'élasticité en traction de 200 à 600 GPa, et une résistance à la traction de 3000 à 7000 MPa, dans lequel la fibre de carbone (A) est une fibre de carbone à base de PAN ; et
   un liant au carbone (D) contenant un carbure de résine, dans lequel le carbure est formé par soumission d'une résine à un traitement de carbonisation, dans lequel la résine est une résine thermodurcissable incluant une résine phénolique,
   dans lequel la fibre de carbone (A) est liée avec le liant au carbone (D),
   dans lequel, pour 100 % en masse du matériau de base poreux, la teneur de la fibre de carbone (A) est de 40 à 80 % en masse et la teneur du liant au carbone (D) est de 20 à 60 % en masse.

2. Matériau de base poreux selon la revendication 1, contenant en outre :

   une fibre de carbone (B) présentant un diamètre de fibre moyen de 3 à 9 $\mu$m, une longueur de fibre moyenne de 2 à 30 mm, un module d'élasticité en traction de 200 à 600 GPa, et une résistance à la traction de 3000 à 7000 MPa, dans lequel la fibre de carbone (B) est une fibre de carbone à base de PAN,
   dans lequel la teneur totale de la fibre de carbone (A) et de la fibre de carbone (B) est de 40 à 80 % en masse pour 100 % en masse du matériau de base poreux, dans lequel une masse de la fibre de carbone (B) contenue dans le matériau de base poreux est inférieure ou égale à une masse de la fibre de carbone (A) contenue dans le matériau de base poreux.

3. Matériau de base poreux selon la revendication 1 ou 2,
   dans lequel une densité apparente est de 0,20 à 0,45 g/cm$^3$, un module d'élasticité en flexion est de 3,0 à 15,0 GPa, et un coefficient de perméation de gaz dans une direction d'épaisseur est de 200 à 600 ml·mm/cm$^2$/h/Pa.

4. Matériau de base poreux selon l'une quelconque des revendications 1 à 3,
   dans lequel le liant au carbone (D) contient en outre un carbure fibreux.

5. Matériau de base poreux selon l'une quelconque des revendications 1 à 4, contenant en outre une poudre de carbone.

6. Électrode poreuse comprenant :
   une couche de revêtement contenant une poudre de carbone et un hydrofuge sur au moins une surface du matériau de base poreux selon l'une quelconque des revendications 1 à 5.

7. Papier de fibre de carbone contenant :

   une fibre de carbone (A) présentant un diamètre de fibre moyen de 10 à 20 $\mu$m, une longueur de fibre moyenne de 2 à 30 mm, un module d'élasticité en traction de 200 à 600 GPa, et une résistance à la traction de 3000 à 7000 MPa, dans lequel la fibre de carbone (A) est une fibre de carbone à base de PAN ; et
   une résine thermodurcissable incluant une résine phénolique,
   dans lequel la fibre de carbone (A) est liée avec la résine,
   dans lequel la teneur de la fibre de carbone (A) est de 20 à 60 % en masse par rapport à 100 % en masse du papier de fibre de carbone.

8. Papier de fibre de carbone selon la revendication 7, contenant en outre :

   une fibre de carbone (B) présentant un diamètre de fibre moyen de 3 à 9 $\mu$m, une longueur de fibre moyenne de 2 à 30 mm, un module d'élasticité en traction de 200 à 600 GPa, et une résistance à la traction de 3000 à 7000 MPa, dans lequel la fibre de carbone (B) est une fibre de carbone à base de PAN,
   la teneur totale de la fibre de carbone (A) et de la fibre de carbone (B) est de 20 à 60 % en masse pour 100 % en masse du papier de fibre de carbone,
   dans lequel une masse de la fibre de carbone (B) contenue dans le papier de fibre de carbone est inférieure ou égale à une masse de la fibre de carbone (A) contenue dans le papier de fibre de carbone.

9. Papier de fibre de carbone selon la revendication 7 ou 8, contenant en outre une poudre de carbone.

10. Procédé de fabrication de papier de fibre de carbone, comprenant :

une fabrication de papier à partir d'une dispersion obtenue par dispersion d'une fibre de carbone dans un milieu de dispersion pour fabriquer une feuille de fibre de carbone ;

un ajout d'une résine à la feuille de fibre de carbone pour fabriquer une feuille de fibre de carbone additionnée de résine, dans lequel la résine est une résine thermodurcissable incluant une résine phénolique ; et

un chauffage et une pressurisation de la feuille de fibre de carbone additionnée de résine, dans lequel la température de chauffage est de 180 à 360 °C et la pression de pressurisation et de 5 à 15 MPa,

dans lequel la fibre de carbone inclut une fibre de carbone (A) présentant un diamètre de fibre moyen de 10 à 20 $\mu$m, une longueur de fibre moyenne de 2 à 30 mm, un module d'élasticité en traction de 200 à 600 GPa, et une résistance à la traction de 3000 à 7000 MPa, dans lequel la fibre de carbone (A) est une fibre de carbone à base de PAN,

dans lequel la teneur de la fibre de carbone (A) est de 20 à 60 % en masse par rapport à 100 % en masse du papier de fibre de carbone.

11. Procédé de fabrication d'un papier de fibre de carbone selon la revendication 10,
dans lequel la fibre de carbone (A) est mélangée avec une fibre de carbone (B) présentant un diamètre de fibre moyen de 3 à 9 $\mu$m, une longueur de fibre moyenne de 2 à 30 mm, un module d'élasticité en traction de 200 à 600 GPa, et une résistance à la traction de 3000 à 7000 MPa, pour faire un mélange de fibres de carbone qui est utilisé en tant que fibre de carbone, dans lequel la fibre de carbone (B) est une fibre de carbone à base de PAN, et dans lequel la teneur totale de la fibre de carbone (A) et de la fibre de carbone (B) est de 20 à 60 % en masse pour 100 % en masse du papier de fibre de carbone, dans lequel une masse de la fibre de carbone (B) dans le mélange de fibres de carbone est inférieure ou égale à une masse de la fibre de carbone (A) dans le mélange de fibres de carbone.

12. Procédé de fabrication d'un matériau de base poreux, comprenant :
une soumission du papier de fibre de carbone fabriqué par le procédé de fabrication d'un papier de fibre de carbone selon la revendication 10 ou 11 à un traitement de carbonisation.

FIG. 1

**EP 3 490 042 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9324390 B
- JP 2013016476 A
- JP 3601581 B
- WO 2016104613 A
- WO 2013157612 A
- JP 2004307815 A
- JP 2006056960 A
- JP 2009084382 A
- JP 2007244997 A
- JP 3699447 B